# DEMANDE DE BREVET EUROPEEN

(11) **EP 4 847 898 A1**
(43) Date de publication de la demande: **02.12.2026**
(21) Numéro de dépôt: 26180908.1
(22) Date de dépôt: 26.05.2026
(51) Int. Cl.: G01M 11/00

(54) **SYSTÈME ET PROCÉDÉ DE CARACTÉRISATION DE PROPRIÉTÉ OPTIQUE D'UN COMPOSANT OPTIQUE**

(30) Priorité: 28.05.2025 FR 2505795
(71) Demandeur: THALES, 92190 Meudon (FR); CENTRE NATIONAL DE LA RECHERCHE SCIENTIFIQUE, 75016 Paris (FR); Université de Rennes, 35700 Rennes (FR); INSTITUT NATIONAL DES SCIENCES APPLIQUEES DE RENNES, 35700 Rennes (FR)
(72) Inventeur: CHARTIER, Thierry, 35042 RENNES CEDEX (FR); BRAMERIE, Laurent, 35042 RENNES CEDEX (FR)
(74) Mandataire: Atout PI Laplace

(57) **Abrégé**

Il est proposé un procédé de détermination d'au moins une propriété optique d'un composant optique (200), comprenant les étapes suivantes :
- générer (1000) successivement N signaux optiques (S₁₋ₙ) modulés selon une fréquence sinusoïdale (*Δωₙ, Δω* différenciation,
- propager (2000) les signaux modulés à travers le composant pour former N signaux optiques utiles (S₂₋ₙ),
- effectuer (3000) une détection cohérente des signaux utiles et délivrer N signaux complexes (*sₙ*(*t*)),
- déterminer (4100), pour chaque signal complexe, au moins deux paramètres de phase (*ϕ*_{*-*1}*ₙ, ϕ*_{*+*1*n*}) relatifs à deux fréquences latérales de modulation (*ω*₋₁, *ω*₊₁),
- déterminer (4200) une valeur de déphasage (*Δϕₙ)* d'au moins les deux paramètres de phase,
- déterminer (4300) la valeur de la propriété optique par régression mathématique des N valeurs de déphasage par rapport aux N valeurs de différenciation.

## Description

### Domaine technique

La présente invention se situe dans le domaine de la caractérisation des propriétés optiques de composants optiques tels que des guides d'onde, et porte en particulier sur un procédé et un système de caractérisation basé sur la détection cohérente.

Dans de nombreux domaines d'applications, il est essentiel de déterminer certaines propriétés optiques d'un composant optique, comme le coefficient non linéaire, la dispersion chromatique, le déphasage non linéaire et la dispersion de biréfringence de groupe. Par exemple, la non-linéarité optique de Kerr des fibres optiques, régie par le coefficient non linéaire de ces composants optiques, a un impact important sur les capacités des réseaux de communication optique. Elle limite notamment la plage des puissances maximales utilisable des signaux optiques à transmettre. Cette non-linéarité optique de Kerr est également avantageusement exploitée dans des applications de traitement du signal tout optique ou de génération de super-continuum via des fibres hautement non linéaires.

Différentes solutions connues existent pour caractériser les propriétés optiques d'un composant optique. En particulier, des solutions existantes de caractérisation du coefficient non linéaire d'une fibre optique (c'est-à-dire de détermination de la valeur du coefficient non linéaire d'une fibre optique) utilisent différentes manifestations de l'effet de non-linéarité optique de Kerr dans les fibres optiques telles que l'auto-modulation de phase ou SPM (acronyme pour l'expression anglo-saxonne correspondante '*self-phase modulation*'), la modulation de phase croisée ou XPM (acronyme pour l'expression anglo-saxonne correspondante 'cross-*phase modulation*'), ou encore le mélange à 4 ondes ou FWM (acronyme pour l'expression anglo-saxonne correspondante '*four-wave mixing*')*.* Ces méthodes de caractérisation du coefficient non linéaire peuvent comprendre des méthodes interférométriques ou non interférométriques, et bien que toutes conviennent à la mesure du coefficient non linéaire d'une fibre optique, elles diffèrent entre elles par leur complexité, leur coût, leur précision. En outre, ces méthodes peuvent avoir des sensibilités variables à la mesure d'autres propriétés optiques d'un composant optique à caractériser.

Avec l'avènement de la détection cohérente dans les systèmes de communication optique, certaines solutions de caractérisation du coefficient non linéaire d'un composant optique basées sur la mesure directe de déphasage non linéaire à partir de récepteurs cohérents ont été proposées. Par exemple, dans l'article *"*Measurement of Total and Longitudinal Nonlinear Phase Shift as Well as Longitudinal Dispersion for a Fiber-Optic Link Using a Digital Coherent Transceivef" de R. Hui, et. al., J. of Light. Technol. 40, 7020-7029, 2022, les auteurs utilisent un système cohérent numérique à diversité de polarisation pour estimer un déphasage non linéaire accumulé par méthode XPM dans une liaison par fibre optique comportant plusieurs étages de fibres et d'amplificateurs. Un tel système requière une conception spécifique de la forme d'onde du signal sonde du composant optique à caractériser, puis un traitement du signal adéquat. Egalement, dans le document "Estimation of Kerr Nonlinearity in an Anti-resonant Hollow-Core Fiber by High-order QAM Transmission" de D. Ge, et. al., Optical Fiber Communication Conference, W4D-6, 2023, les auteurs proposent de mesurer la non-linéarité optique de Kerr dans une fibre à cœur creux basée sur l'estimation du déphasage non linéaire utilisant un format de modulation de type QAM (acronyme pour l'expression anglo-saxonne correspondante '*quadrature amplitude modulation'* signifiant 'modulation d'amplitude en quadrature' en français) d'ordre élevé. Dans l'article "Low-Complexity Method for Optical Fiber Nonlinear Coefficient Measurement" de R. Schanner, et. al., SBMO/IEEE MTT-S International Microwave and Optoelectronics Conference (IMOC), 1-3, 2021, les auteurs présentent une méthode nécessitant un laser monomode à onde continue, un modulateur optique et un récepteur cohérent standard pour déterminer le coefficient non linéaire d'une fibre optique. Dans cet article, les auteurs utilisent un signal sinusoïdal modulé en amplitude pour mesurer la variation instantanée de la phase non linéaire à l'aide d'un récepteur homodyne auto-cohérent.

Il est à noter que la méthode de détection cohérente est une méthode permettant d'effectuer des mesures de phase d'un signal optique, de phase *ϕₛ* et de fréquence angulaire *ωₛ*, à mesurer ou à détecter par rapport à un signal optique de référence de phase *ϕₗₒ* et de fréquence angulaire *ωₗₒ.* détection cohérente permet de déterminer un signal complexe formé de deux signaux électriques distincts issus d'une paire de photodiodes équilibrées, chaque paire fournissant une certaine somme et une certaine différence des deux champs électriques des signaux optiques d'entrée du circuit. Le spectre du signal complexe déterminé fournit alors une raie spectrale centrée sur le décalage des fréquences angulaires des signaux optiques (*ΔΩ* = *ωₗₒ* - *ωₛ*) et de largeur de raie égale au décalage des phases des signaux optiques (*Δϕ* = *ϕₛ* - *ϕₗₒ*).

Cependant, un tel décalage *Δϕ* entre la phase du signal optique à mesurer et la phase du signal optique de référence présente généralement des fluctuations aléatoires non négligeables dues au bruit de phase de chacun des deux signaux. En particulier, la phase *ϕₛ* du signal optique à mesurer peut s'exprimer en fonction de la phase initiale *ϕᵢ* arbitraire ou aléatoire du signal optique à l'entrée du composant à caractériser, ainsi qu'en fonction du décalage de phase linéaire *ϕ_{L}* et du décalage de phase non-linéaire *ϕ_{NL}* subis par le signal optique au cours de la traversée du composant optique de longueur *L.* La composante de décalage de phase linéaire *ϕ_{L}* est très sensible aux perturbations environnementales et peut présenter des variations aléatoires. Par conséquent, comme les phases *ϕₛ* (et notamment *Φ_{L}*) et *ϕₗₒ* des signaux optiques à mesurer et de référence sont des quantités aléatoires variables dans le temps dans une gamme [0 - 2π], la détermination du décalage de phase non-linéaire *ϕ_{NL}* à partir de la mesure directe du décalage de phase *Δϕ* pour un signal optique à mesurer formé par une onde monochromatique est généralement très complexe, voir difficilement atteignable.

Ainsi, les solutions de caractérisation connues basées sur la détection cohérente sont sensibles aux perturbations environnementales et aux variations aléatoires, et donc ne sont pas optimales.

Il existe ainsi un besoin pour un procédé et un système améliorés de détermination de propriétés optiques d'un composant optique.

### Résumé de l'invention

A cet effet, il est proposé un procédé de détermination d'au moins une propriété optique d'un composant optique. Le procédé comprend les étapes consistant à :
- générer de manière successive un ensemble de N signaux optiques modulés à partir d'un faisceau laser monochromatique, selon une fréquence de modulation sinusoïdale donnée, N étant un entier supérieur ou égal à 2. Chaque signal optique modulé a une puissance moyenne totale donnée. Les signaux optiques modulés ont des valeurs différentes d'un paramètre de différenciation choisi parmi un ensemble de paramètres de différenciation comprenant au moins la fréquence de modulation sinusoïdale et la puissance moyenne totale,
- propager les signaux optiques modulés à travers le composant optique pour former N signaux optiques utiles, et
- effectuer une détection cohérente de chacun des signaux optiques utiles en sortie du composant optique et délivrer N signaux complexes résultants.

Le procédé comprenant en outre les étapes suivantes consistant à :
- déterminer, pour chaque signal complexe, un ensemble de paramètres de phase comprenant au moins un premier paramètre de phase, ϕ₋₁ₙ, relatif à une première fréquence angulaire latérale de modulation du signal optique utile, et un deuxième paramètre de phase, ϕ₊₁ₙ, relatif à une deuxième fréquence angulaire latérale de modulation du signal optique utile,
- déterminer une valeur, Δϕₙ, d'un paramètre de déphasage défini par une combinaison linéaire d'au moins le premier paramètre de phase, ϕ₋₁ₙ, et le deuxième paramètre de phase, ϕ₊₁ₙ,
- déterminer la valeur de la propriété optique du composant optique en effectuant une régression mathématique des N valeurs, Δϕₙ, du paramètre de déphasage par rapport aux N valeurs du paramètre de différenciation des N signaux optiques modulés.

Avantageusement, le procédé peut comprendre en outre les étapes consistant à :
- appliquer une transformée de Fourier à chacun des N signaux complexes, pour former N ensembles de données spectrales, chaque ensemble de données spectrales comprenant une première raie spectrale relative à la première fréquence angulaire latérale de modulation, une deuxième raie spectrale relative à la deuxième fréquence angulaire latérale de modulation, et une troisième raie spectrale relative à la fréquence porteuse de modulation du signal optique utile,
- appliquer un filtrage spectral autour de chacune des raies spectrales obtenues pour générer N données spectrales filtrées,
- appliquer une transformée de Fourier inverse à chacune des données spectrales filtrées, pour former N signaux complexes corrigés.

Pour chaque signal optique utile considéré, l'ensemble de paramètres de phase peut être déterminé à partir de l'argument de chacun des signaux complexes corrigés obtenus.

Dans des modes de réalisation, l'ensemble de paramètres de phase déterminé pour chaque signal complexe comprend un troisième paramètre de phase, *ϕ*_{0*n*}, relatif à une la fréquence porteuse de modulation du signal optique utile (S2-n). La combinaison linéaire définissant le paramètre de déphasage, Δ*ϕₙ*, peut être la relation : Δϕₙ = ϕ₊₁ₙ + ϕ₋₁ₙ - 2ϕ₀ₙ

Dans d'autres modes de réalisation, la combinaison linéaire définissant le paramètre de déphasage, Δ*ϕₙ*, peut être la relation : Δϕₙ = ϕ₊₁ₙ - ϕ₋₁ₙ

Le paramètre de différenciation peut correspondre à la puissance moyenne totale des signaux optiques modulés, les signaux optiques modulés ayant la même fréquence de modulation sinusoïdale. La propriété optique du composant optique peut être le coefficient non linéaire du composant optique obtenu à partir du rapport entre un coefficient directeur d'une droite de régression estimée par régression linéaire des N valeurs du paramètre de déphasage par rapport aux N valeurs du paramètre de différenciation, et une valeur de longueur effective du composant optique traversée par les signaux optiques modulés.

Le paramètre de différenciation peut correspondre à la fréquence de modulation sinusoïdale donnée des signaux optiques modulés, les signaux optiques modulés ayant la même puissance moyenne totale. La propriété optique du composant optique peut être la dispersion chromatique du composant optique obtenue à partir du rapport entre un paramètre d'ajustement d'une courbe de régression estimée par régression quadratique des N valeurs du paramètre de déphasage par rapport aux N valeurs du paramètre de différenciation, et une valeur de la longueur du composant optique traversée par les signaux optiques modulés.

Le paramètre de différenciation peut correspondre à la fréquence de modulation sinusoïdale donnée des signaux optiques modulés, les signaux optiques modulés ayant la même puissance moyenne totale. La propriété optique du composant optique peut être le déphasage non linéaire du composant optique obtenue à partir du rapport entre un paramètre d'interception d'une courbe de régression estimée à partir d'une régression quadratique des N valeurs du paramètre de déphasage par rapport aux N valeurs du paramètre de différenciation, et une valeur d'entier égale à 4

Dans des modes de réalisation, la détection cohérente de chaque signal optique utile (S₂₋ₙ) peut être appliquée sur une première composante définie selon une première polarisation du signal et sur une deuxième composante définie selon une deuxième polarisation de signal, de manière à délivrer N signaux complexes selon la première polarisation et N signaux complexes selon la deuxième polarisation. Chaque paramètre de phase peut correspondre à une phase moyenne entre des valeurs de phases des première et deuxième composantes, ${ϕ}_{k}^{x}$ et ${ϕ}_{k}^{y}$, telles que : ${ϕ}_{k} = \frac{1}{2} \times \left({ϕ}_{k}^{x}+{ϕ}_{k}^{y}\right)$ (avec *k* = -1, 0 ou +1).

Dans d'autres modes de réalisation, la détection cohérente de chaque signal optique utile peut être appliquée sur une première composante définie selon une première polarisation du signal et sur une deuxième composante définie selon une deuxième polarisation de signal, de manière à délivrer N signaux complexes selon la première polarisation et N signaux complexes selon la deuxième polarisation. Chaque paramètre de phase peut correspondre à un déphase entre les première et deuxième composantes, ${ϕ}_{k}^{x}$ et ${ϕ}_{k}^{y}$, telle que : ${ϕ}_{k} = \frac{1}{2} \times \left({ϕ}_{k}^{x}-{ϕ}_{k}^{y}\right)$ (avec k = -1, 0 ou +1).

Le paramètre de différenciation peut correspondre à la fréquence de modulation sinusoïdale donnée des signaux optiques modulés, les signaux optiques modulés ayant la même puissance moyenne totale. La propriété optique du composant optique peut être la dispersion de biréfringence de groupe du composant optique obtenue à partir du rapport entre un paramètre d'ajustement d'une courbe de régression estimée par régression quadratique des N valeurs du paramètre de déphasage par rapport aux N valeurs du paramètre de différenciation, et une valeur de la longueur du composant optique traversée par les signaux optiques modulés.

Le paramètre de différenciation peut correspondre à la fréquence de modulation sinusoïdale donnée des signaux optiques modulés, les signaux optiques modulés ayant la même puissance moyenne totale. La propriété optique du composant optique peut être la biréfringence de groupe du composant optique obtenu à partir du rapport entre un coefficient directeur d'une droite de régression estimée par régression linéaire des N valeurs du paramètre de déphasage par rapport aux N valeurs du paramètre de différenciation, et une valeur du rapport entre la longueur du composant optique traversée par les signaux optiques modulés et la vitesse de la lumière dans le vide.

L'invention fournit également un système de détermination d'au moins une propriété optique d'un composant optique. Le système comprend :
- un générateur de signal configuré pour générer de manière successive un ensemble de N signaux optiques modulés, N étant un entier supérieur ou égal à 2, chaque signal optique modulé ayant une puissance moyenne totale donnée et étant un signal optique modulé à partir d'un faisceau laser monochromatique, selon une fréquence de modulation sinusoïdale donnée, les signaux optiques modulés ayant des valeurs différentes d'un paramètre de différenciation choisi parmi un ensemble de paramètres de différenciation comprenant la fréquence de modulation sinusoïdale et la puissance moyenne totale, les signaux optiques modulés étant transmis à travers le composant optique pour former N signaux optiques utiles résultants,
- un détecteur cohérent configuré pour effectuer une détection cohérente de chacun des signaux optiques utiles en sortie du composant optique et délivrer N signaux complexes résultants.

Le système comprend en outre un dispositif d'analyse configuré pour analyser chaque signal complexe et déterminer au moins un premier paramètre de phase, ϕ₋₁ₙ, relatif à une première fréquence angulaire latérale de modulation du signal optique utile, et un deuxième paramètre de phase, ϕ₊₁ₙ, relatif à une deuxième fréquence angulaire latérale de modulation du signal optique utile.

Le dispositif d'analyse est configuré pour déterminer une valeur, Δϕₙ, d'un paramètre de déphasage entre les paramètres de phase déterminées, le paramètre de déphasage, Δϕₙ, étant défini par une combinaison linéaire d'au moins le premier paramètre de phase, ϕ₋₁ₙ, et le deuxième paramètre de phase, ϕ₊₁ₙ.

Le dispositif d'analyse est en outre configuré pour déterminer une valeur de la propriété optique du composant optique en effectuant une régression mathématique des N valeurs, Δϕₙ, du paramètre de déphasage par rapport aux valeurs du paramètre de différenciation des N signaux optiques modulés.

Avantageusement, le générateur de signal peut comprendre :
- une source optique initiale configurée pour générer le faisceau laser monochromatique de fréquence angulaire correspondant à la fréquence porteuse de modulation des signaux optiques modulés et utiles, et
- un modulateur optique configuré pour appliquer au moins une fréquence de modulation sinusoïdale au faisceau laser monochromatique, pour former l'ensemble de N signaux optiques modulés.

Les modes de réalisation de l'invention permettent ainsi d'obtenir un procédé et un système améliorés de détermination de propriétés optiques d'un composant optique, tel que par exemple un guide d'onde.

En particulier, les modes de réalisation de l'invention fournissent un procédé et un système basés sur la détection cohérente permettant d'atténuer, voire d'éliminer, les fluctuations de phase qui surviennent à partir de la différence de fréquence entre les deux signaux optiques à mesurer et de référence, et leur bruit de phase respectif, permettant ainsi une mesure absolue des déphasages induits par des effets non linéaires dans un composant optique à caractériser.

Avantageusement, les modes de réalisation de l'invention fournissent un système présentant une complexité de mise en œuvre et un coût d'implémentation faibles, notamment en raison des équipements de détection cohérente de faible coût et prêts à l'emploi ('*plug-and-play*' en anglais), et des traitements des données numériques requérant des opérations numériques simples, telles que des opérations de transformées de Fourier ou de filtrage.

### Description des figures

D'autres caractéristiques, détails et avantages de l'invention ressortiront à la lecture de la description faite en référence aux dessins annexés donnés à titre d'exemple.
[Fig.1] La figure 1 est un schéma représentant un système de détermination de propriétés optiques de composant optique, selon des modes de réalisation de l'invention.
[Fig.2] La figure 2 est un schéma représentant un générateur de signal optique d'un système de détermination de propriétés optiques de composant optique, selon des modes de réalisation de l'invention.
[Fig.3] La figure 3 est un schéma représentant un générateur de signal optique d'un système de détermination de propriétés optiques de composant optique, selon des modes de réalisation de l'invention.
[Fig.4] La figure 4 est un schéma représentant un détecteur cohérent d'un système de détermination de propriétés optiques de composant optique, selon des modes de réalisation de l'invention.
[Fig.5] La figure 5 est un schéma représentant un détecteur cohérent d'un système de détermination de propriétés optiques de composant optique, selon des modes de réalisation de l'invention.
[Fig.6] La figure 6 est un schéma représentant une chaîne de traitement d'un détecteur cohérent d'un système de détermination de propriétés optiques de composant optique, selon des modes de réalisation de l'invention.
[Fig.7] La figure 7 est un schéma représentant un dispositif d'analyse d'un système de détermination de propriétés optiques de composant optique, selon des modes de réalisation de l'invention.
[Fig.8] La figure 8 est un graphique représentant une transformée de Fourier d'un signal complexe générée par un dispositif d'analyse d'un système de détermination de propriétés optiques de composant optique, selon des modes de réalisation de l'invention.
[Fig.9] La figure 9 est un graphique représentant l'évolution temporelle de trois paramètres de phase déterminée par un dispositif d'analyse d'un système de détermination de propriétés optiques de composant optique, selon des modes de réalisation de l'invention.
[Fig.10] La figure 10 est un graphique représentant l'évolution temporelle d'un paramètre de déphasage à trois ondes déterminée par un dispositif d'analyse d'un système de détermination de propriétés optiques de composant optique, selon des modes de réalisation de l'invention.
[Fig.11] La figure 11 est un graphique représentant l'évolution en fonction de puissances moyennes totales d'un coefficient non linéaire déterminée pour trois différents types de composant optique par un dispositif d'analyse d'un système de détermination de propriétés optiques de composant optique, selon des modes de réalisation de l'invention.
[Fig.12] La figure 12 est un graphique représentant l'évolution en fonction de fréquences de modulation d'un coefficient non linéaire déterminée pour trois différents types de composant optique par un dispositif d'analyse d'un système de détermination de propriétés optiques de composant optique, selon des modes de réalisation de l'invention.
[Fig.13] La figure 13 est un tableau représentant des valeurs théoriques et des valeurs déterminées par un système de détermination de propriétés optiques de composant optique, du coefficient non linéaire de trois différents types de composant optique, selon des modes de réalisation de l'invention.
[Fig.14] La figure 14 est un organigramme représentant un procédé de détermination de propriétés optiques d'un composant optique, selon des modes de réalisation de l'invention.
[Fig.15] La figure 15 est un organigramme représentant des étapes du procédé de détermination de propriétés optiques d'un composant optique, selon des modes de réalisation de l'invention.

Des références identiques sont utilisées dans les figures pour désigner des éléments identiques ou analogues. Pour des raisons de clarté, les éléments représentés ne sont pas à l'échelle.

### Description détaillée

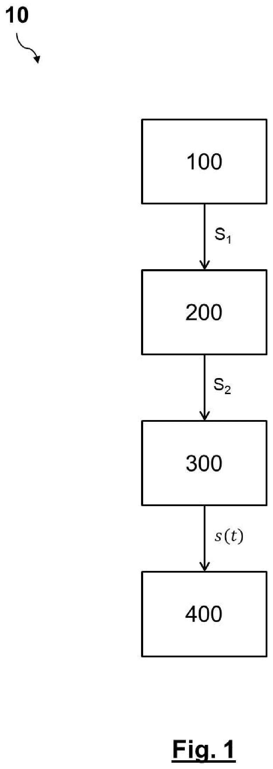

La figure 1 représente schématiquement un système 10 comprenant un générateur de signal optique 100, un composant optique 200, un dispositif de détection optique cohérente 300 et un dispositif d'analyse 400, selon des modes de réalisation de l'invention.

Le système 10 (encore appelée 'système de caractérisation') est configuré pour déterminer (ou caractériser) au moins une propriété optique du composant optique 200 (également appelé « composant à tester » ou DUT, acronyme pour l'expression anglo-saxonne correspondante '*Device Under Test* signifiant 'dispositif sous test' en français).

Avantageusement, le composant optique 200 peut constituer un milieu de propagation dans lequel un signal optique peut être propagé.

Tel qu'utilisé ici, un 'signal optique' fait référence à une onde électromagnétique (ou faisceau optique) continue et cohérente provenant d'une source optique, telle que par exemple un faisceau laser. Un faisceau optique peut notamment être caractérisé par sa pulsation *ω* (encore appelée 'vitesse angulaire' ou 'fréquence angulaire', et inversement proportionnelle à la longueur d'onde du faisceau *λ*), sa puissance *P*, sa polarisation, ou encore sa phase.

Dans des modes de réalisation, le milieu de propagation relatif au composant optique 200 peut être un guide d'onde optique. Un 'guide d'onde optique' fait référence à un moyen physique ou une structure physique guidant un signal optique. Par exemple et sans limitations, un guide d'onde optique peut être tout type de fibre optique telle qu'une fibre optique monomode, dite SMF (acronyme pour l'expression anglo-saxonne *Single Mode Fibre*), une fibre à dispersion décalée, dite DSF (acronyme pour l'expression anglo-saxonne *Dispersion Shifted Fibre*), une fibre à maintien de polarisation, dite PMF (acronyme pour l'expression anglo-saxonne *Polarization Maintaining Fiber*), ou encore une fibre hautement non linéaire, dite HNLF (acronyme pour l'expression anglo-saxonne *Highly Nonlinear Fiber*). Un guide d'onde optique peut également être un guide d'onde intégré. Le composant optique 200 peut être un amplificateur optique utilisant par exemple des guides d'onde en semi-conducteurs, ou comprenant au moins une fibre optique dopée, à l'erbium ou à l'ytterbium par exemple, constituant le milieu de gain de l'amplificateur.

Une propriété optique du composant optique 200 (également appelée 'paramètre caractéristique' du composant optique 200) à déterminer par le système 10 peut être une propriété parmi un ensemble de propriétés optiques caractérisables du composant optique 200. Avantageusement, un tel ensemble de propriétés optiques caractérisables peut comprendre au moins le coefficient non linéaire *γ* (ou coefficient non linéaire du 3^{ème} ordre), la dispersion chromatique *β*₂, le déphasage non linéaire (également appelé l'angle Kerr) *ϕ_{NL}*, la dispersion de biréfringence de groupe *δβ*₂ et la biréfringence de groupe *B_{g}*.

La valeur déterminée d'une telle propriété optique d'un composant optique peut être utilisée dans de nombreuses applications. Par exemple et sans limitations, la valeur du coefficient non linéaire *γ* d'un composant optique, ou d'autres propriétés optiques du composant, peut être utilisée dans la mise en œuvre des systèmes réseaux de communication optique, de divers systèmes de traitement du signal tout optique, des systèmes utilisant la conversion de longueur d'onde ou la génération de super-continuum, des équipements (par exemple de télécommunications) exploitation la génération d'un soliton, ou encore la mise en œuvre d'amplificateurs paramétriques optiques. Par exemple, la valeur du coefficient non linéaire *γ* ou du déphasage non-linéaire d'un composant optique peut être déterminée dans le but de compenser des impacts de l'effet Kerr.

Pour déterminer une propriété optique du composant optique 200, le système 10, via le générateur de signal optique 100, est configuré pour générer de manière successive un ensemble de N signaux optiques modulés S₁₋ₙ. L'indice 'n' est associé au n-ième signal optique généré par le générateur de signal optique 100. L'indice 'n' est un entier compris entre 1 et N, la valeur de N étant supérieure ou égal à 2. Par exemple et sans limitations, le générateur de signal optique 100 du système 10 peut être configuré pour générer un premier signal optique modulé S₁₋₁, puis pour générer, de manière consécutive, un deuxième signal optique modulé S₁₋₂.

Avantageusement, un signal optique modulé S₁₋ₙ (ou simplement noté S₁) peut être formé à partir d'un faisceau laser monochromatique S₀ (appelé également 'signal optique initial') de pulsation initiale *ω*₀. En particulier, l'amplitude du signal optique initial est modulée en amplitude par une onde sinusoïdale définie selon une fréquence angulaire de modulation *Δω* (également appelé 'fréquence de modulation' dans la suite de la description). La fréquence de modulation *Δω* fait ainsi référence au décalage de pulsation proportionnelle à une fréquence *f* appliquée par le modulateur optique notamment pour moduler le signal optique initial, tel que *Δω* = 2*π* × *f.* Le spectre du signal optique modulé S₁ est alors caractérisé par deux bandes latérales de fréquence angulaire, respectivement notées *ω*₋₁ et *ω*₊₁, de chaque côté de la fréquence optique *ω*₀ correspondant à la fréquence porteuse du signal optique modulé. Les fréquences angulaires latérales *ω*_{±1} peuvent être définies selon l'équation (01) suivante :
${ω}_{\pm 1} = {ω}_{0} \pm Δω$ (01)

Les différents signaux optiques modulés S₁₋ₙ se distinguent les uns des autres par N valeurs distinctes d'un même paramètre de différenciation.

Un paramètre de différenciation des différents signaux optiques modulés S₁₋ₙ peut être un paramètre choisi parmi un ensemble de paramètres comprenant au moins la puissance moyenne totale *Pₙ* du signal optique modulé S₁₋ₙ et la fréquence de modulation Δ*ωₙ* du signal optique initial S₀.

Ainsi, dans des modes de réalisation, le paramètre de différenciation peut être la puissance moyenne totale *Pₙ* du signal optique modulé S₁₋ₙ. Par exemple et sans limitations, le premier signal optique modulé S₁₋₁ peut être caractérisé par une première valeur de puissance *P*₁ en sortie du générateur de signal optique 100, et le deuxième signal optique modulé S₁₋₂ peut être caractérisé par une deuxième valeur de puissance *P*₂ en sortie du générateur de signal optique 100, différente de la première valeur de puissance *P*₁. Dans ce cas, les signaux optiques modulés S₁₋ₙ peuvent être obtenus en utilisant une modulation sinusoïdale selon une (même) fréquence de modulation *Δω* (c'est-à-dire invariable pour chacun des signaux optiques modulés générés).

Dans d'autres modes de réalisation, le paramètre de différenciation peut être la fréquence de modulation du signal optique initial S₀, avec une fréquence de modulation Δ*ωₙ* pour chacun des signaux S₁₋ₙ résultant. Par exemple et sans limitations, le premier signal optique modulé S₁₋₁ peut être obtenu via une modulation selon une première valeur de fréquence de modulation *Δω*₁, et le deuxième signal optique modulé S₁₋₂ peut être obtenu via une modulation selon une deuxième valeur de fréquence de modulation *Δω*₂ différente de la première valeur de fréquence de modulation *Δω*₁. Dans ce cas, les signaux optiques modulés S₁₋ₙ peuvent être caractérisés par la même puissance moyenne totale, telle que *P*₁ = *P*₂ = ··· *Pₙ* = *··· P_{N}.* puissance moyenne totale, relative à la notation *Pₙ* (et également notée dans ce cas *P_{avg}*), peut correspondre à une puissance moyenne totale invariable pour chacun des signaux optiques modulés générés.

Le système 10 est en outre configuré pour propager successivement les N signaux optiques modulés S₁₋ₙ (également appelé 'signaux sondes') à travers le composant optique 200 à caractériser pour former respectivement N signaux optiques utiles S₂₋ₙ (ou 'signaux optiques transmis') résultant, en sortie du composant optique 200. Tout comme un signal optique modulé, le spectre d'un signal optique utile S₂ peut être caractérisé par deux bandes latérales de fréquence angulaire, *ω*₋₁ et *ω*₊₁, de chaque côté de la fréquence porteuse *ω*₀.

Le système 10, via le dispositif de détection optique cohérente 300, est en outre configuré pour effectuer une détection cohérente de chaque signal optique utile S₂₋ₙ et déterminer ainsi un ensemble de N signaux complexes *sₙ*(*t*), correspondants à la détermination du champ électrique des signaux optiques modulés transmis à travers le composant optique 200. Par exemple et sans limitations, le dispositif de détection optique cohérente 300 (appelé également 'détecteur cohérent') peut être configuré pour déterminer un premier signal complexe *s*₁(*t*) issu de la mesure de détection cohérente du premier signal optique utile S₂₋₁, puis pour déterminer ensuite un deuxième signal complexe *s*₂(*t*) issu de la mesure de détection cohérente du deuxième signal optique utile S₂₋₂.

Avantageusement, chaque signal complexe *sₙ*(*t*) (désigné généralement par *s*(*t*)) est formé à partir d'au moins deux signaux électriques. En particulier, un signal complexe *s*(*t*) peut être formé à partir des deux signaux électriques notés *s_{I}*(*t*) et *s_{Q}*(*t*) issus de la mesure de détection cohérente du signal optique utile S₂₋ₙ par rapport à un signal optique de référence Sₗₒ. Un signal complexe *s*(*t*) peut alors être défini selon l'équation (02) suivante :
$s \left(t\right) = {s}_{I} \left(t\right) + i . {s}_{Q} \left(t\right)$ (02)

Le système 10, via le dispositif d'analyse 400, est configuré pour analyser chaque signal complexe *sₙ*(*t*) et déterminer un ensemble de paramètres de phases comprenant au moins un premier paramètre de phase, *ϕ*_{-1*n*}, relatif à la première fréquence angulaire latérale de modulation *ω*₋₁ du signal optique utile S₂₋ₙ, et un deuxième paramètre de phase, *ϕ*_{+1*n*}, relatif à la deuxième fréquence angulaire latérale de modulation *ω*₊₁ du signal optique utile S₂₋ₙ.

Avantageusement, pour chaque signal complexe *sₙ*(*t*), l'ensemble de paramètres de phases déterminé par le dispositif d'analyse 400 peut comprendre également un troisième paramètre de phase, *ϕ*_{0*n*}, relatif à la fréquence porteuse *ω*₀ de modulation du signal optique utile S₂₋ₙ.

Les trois paramètres de phases, notées *ϕ*_{0*n*}, *ϕ*_{-1*n*}, *ϕ*_{*+*1*n*} (également noté (*ϕ*₋₁, *ϕ*₊₁, *ϕ*₀)*ₙ*, ou plus généralement *ϕ*_{*-*1}, *ϕ*₊₁ et *ϕ*₀) sont associés aux différentes raies spectrales relatives aux bandes de fréquences latérales, *ω*₋₁ et *ω*₊₁, et à la fréquence porteuse *ω*₀ du signal optique utile S₂₋ₙ respectivement.

Le dispositif d'analyse 400 est en outre configuré pour déterminer, à partir de chaque signal complexe *sₙ*(*t*), une valeur *Δϕₙ* d'un paramètre de déphasage (généralement noté Δ*ϕ* et dite 'valeur de déphasage') défini par une combinaison linéaire d'au moins du premier paramètre de phase *ϕ*_{*-*1*n*} et du deuxième paramètre de phase, *ϕ*₊₁*ₙ.*

Dans des modes de réalisation, le paramètre de déphasage Δ*ϕₙ* peut être un paramètre de déphasage à trois ondes, également appelé TWPS (acronyme pour l'expression anglo-saxonne correspondante '*three-wave phase shiff*'), et noté ${Δϕ}_{n}^{\left(3\right)}$, défini à partir des trois paramètres de phases *ϕ*_{*-*1}, *ϕ*₊₁ et *ϕ*₀ déterminées. En particulier, le paramètre de déphasage à trois ondes ( ${Δϕ}_{n}^{\left(3\right)}$ ou Δ*ϕ*^{(*3*)}) peut être défini selon la relation (03) suivant correspondant à l'équation de détermination du déphasage à trois ondes :
${Δϕ}_{n}^{\left(3\right)} = {ϕ}_{+ 1 n} + {ϕ}_{- 1 n} - 2 {ϕ}_{0 n}$ (03)

Dans des modes de réalisation, le paramètre de déphasage Δ*ϕₙ* peut être un paramètre de déphasage à deux ondes, également noté ${Δϕ}_{n}^{\left(2\right)}$, défini à partir des deux paramètres de phases *ϕ*_{*-*1}, *ϕ*₊₁ déterminées. En particulier, le paramètre de déphasage à deux ondes ( ${Δϕ}_{n}^{\left(2\right)}$ ou Δ*ϕ*⁽²⁾) peut être défini selon la relation (04) suivant correspondant à l'équation de détermination du déphasage à deux ondes :
${Δϕ}_{n}^{\left(2\right)} = {ϕ}_{+ 1 n} - {ϕ}_{- 1 n}$ (04)

Avantageusement, le paramètre de déphasage *Δϕₙ* noté sans exposant « (2) » ou « (3) » peut faire référence notamment au paramètre de déphasage Δ*ϕₙ* défini selon la combinaison linéaire relative à l'équation (03) ou à l'équation (04).

Il est à noter que la valeur du paramètre de déphasage *Δϕₙ* dépend de la valeur du paramètre de différenciation choisi. Le paramètre de déphasage *Δϕₙ* est donc différent d'un signal optique à l'autre. Il existe alors une équation spécifique appelée « équation d'extraction d'une propriété optique » reliant les N valeurs *ϕₙ* du paramètre de déphasage aux N valeurs distinctes du paramètre de différenciation (dites 'valeurs de différenciation'), Δ*ωₙ* ou *Pₙ,* caractériser. Ainsi, le dispositif d'analyse 400 est en outre configuré pour déterminer une valeur de caractérisation d'une telle propriété optique du composant optique 200 en effectuant une régression mathématique de l'ensemble des N valeurs Δ*ϕₙ* par rapport à N valeurs du paramètre de différenciation pour générer les N signaux optiques modulés S₁₋ₙ. Une telle régression peut être effectuée par extrapolation ou interpolation par exemple.

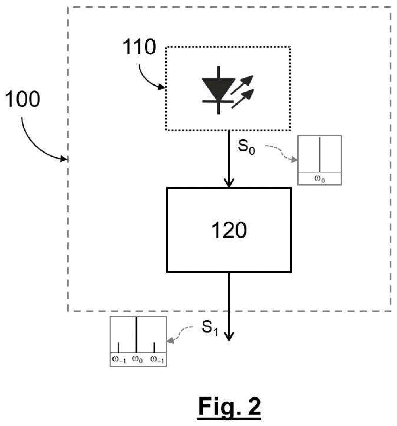

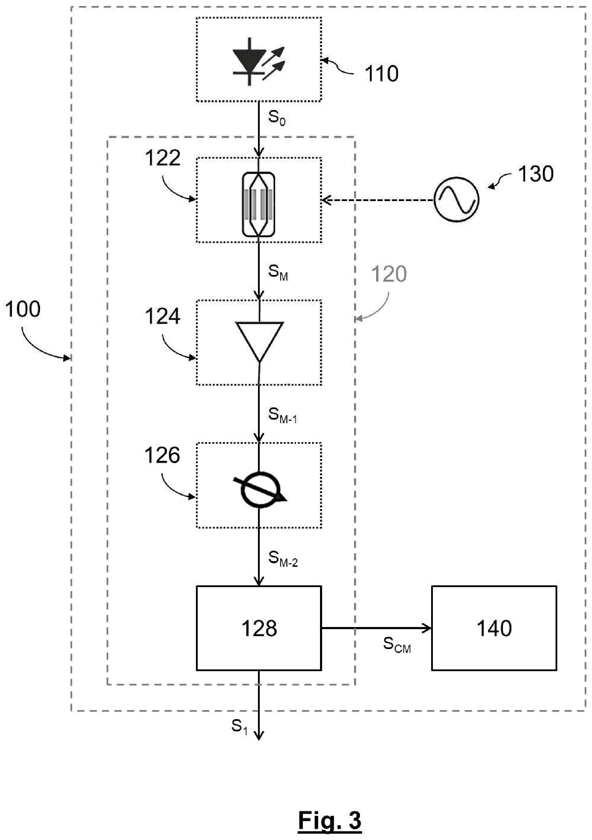

Les figures 2 et 3 représentent schématiquement un générateur de signal optique 100 comprenant une source optique initiale 110 et un système de modulation de signal 120, selon des modes de réalisation de l'invention.

La source optique initiale 110 est configurée pour générer le faisceau laser monochromatique S₀ de fréquence angulaire *ω*₀.

Par exemple et sans limitations, la source optique initiale 110 peut être une diode laser ayant une longueur d'onde fixée à 1550nm. Comme imagé sur la figure 2, le spectre du signal optique initial S₀ peut être caractérisé par un unique pic de fréquence *ω*₀.

Le système de modulation de signal 120 peut être configuré pour appliquer une modulation sinusoïdale du signal optique initial S₀ de fréquence angulaire *ω*₀ de manière à former les N signaux optique modulés S₁₋ₙ.

Dans des modes de réalisation, le générateur de signal optique 100 peut comprendre en outre une unité de pilotage 130 du système de modulation de signal 120, comme représenté sur la figure 3. L'unité de pilotage 130 est notamment configurée pour appliquer les différentes N valeurs du paramètre de différenciation (i.e. puissance moyenne totale *Pₙ* ou fréquence de modulation Δ*ωₙ*) au système de modulation de signal 120 pour générer les N différents signaux optiques modulés.

Avantageusement, le système de modulation de signal 120 comprend un modulateur optique 122 configuré pour appliquer une fréquence unique *f* (i.e. fréquence angulaire de modulation Δ*ω*), ou différentes fréquences *fₙ* (i.e. différentes fréquences angulaires de modulation Δ*ωₙ*), au signal optique initial S₀, de manière à former respectivement un unique signal optique modulé ou N différents signaux optiques modulés. Le modulateur optique 122 peut être par exemple un modulateur électro-optique, par exemple de type interféromètre de Mach-Zehnder intégré, au Niobate de lithium (LiNbO3).

L'application successive des N fréquences de modulation Δ*ωₙ* par le modulateur optique 122 peut être contrôlée par l'unité de pilotage 130 du système de modulation de signal 120. Par exemple et sans limitations, et tel qu'illustré sur la figure 3, l'unité de pilotage 130 peut être configurée pour appliquer successivement N différentes fréquences de modulation au modulateur électro-optique de type interféromètre de Mach-Zehnder résultants des différentes modulations.

Une valeur de fréquence unique *f* ou une plage de valeur des différentes fréquences *fₙ* peut être comprise, par exemple et sans limitations, entre quelques dizaines de MHz et 1 GHz, ou quelques dizaines de GHz.

Dans des modes de réalisation, la ou les valeurs de fréquence appliquée (f ou *fₙ*) peut être prédéfinie en fonction de la propriété optique à caractériser et/ou du composant optique à analyser.

Avantageusement, le modulateur optique 122 peut en outre être configuré pour appliquer une valeur prédéfinie d'amplitude de modulation.

Dans des modes de réalisation, les signaux optiques modulés en sortie du modulateur optique 122 peuvent correspondre directement aux signaux optiques modulés S₁₋ₙ à injecter dans le composant optique 200. Ceci peut être le cas notamment si le paramètre de différenciation est en effet la fréquence de modulation Δ*ωₙ* du signal optique initial S₀.

Alternativement, un signal optique modulé en sortie du modulateur optique 122 peut correspondre à un signal optique modulé intermédiaire S_{M}.

Dans certains modes de réalisation, le système de modulation de signal 120 peut comprendre en outre un amplificateur de signal optique 124 configuré pour amplifier le signal optique intermédiaire S_{M} en sortie du modulateur optique 122, de manière à former un signal optique modulé amplifié S_{M-1}, comme illustré sur la figure 3. Un tel amplificateur de signal optique 124 peut être formé à partir d'un amplificateur à fibre dopée à l'erbium par exemple.

Avantageusement, le système de modulation de signal 120 peut comprendre un atténuateur optique variable 126 prenant en entrée un signal optique intermédiaire S_{M} en sortie du modulateur optique 122, ou un signal optique modulé amplifié S_{M-1} en sortie de l'amplificateur de signal optique 124. L'atténuateur optique 126 est configuré pour adapter la ou les valeurs de la puissance moyenne totale *Pₙ* des signaux optiques modulés S₁₋ₙ en sortie du système de modulation de signal 120.

Dans des modes de réalisation, les signaux optiques modulés en sortie de l'atténuateur optique 126 peuvent correspondre directement aux signaux optiques modulés S₁₋ₙ à injecter dans le composant optique 200. Alternativement, le système de modulation de signal 120 peut comprendre en outre un séparateur optique 128 prenant en entrée les signaux optiques modulés et contrôlés en puissance S_{M-2} en sortie de l'atténuateur optique 126, comme représenté sur la figure 3. Dans ce cas le séparateur optique 128 peut être configuré pour délivrer d'une part les signaux optiques modulés S₁₋ₙ à injecter dans le composant optique 200 et d'autre part des signaux optiques subsidiaires S_{CM-n} (ou simplement S_{CM}).

Les signaux optiques subsidiaires S_{CM} sont délivrés à une unité de contrôle de la puissance 140, comme illustré sur la figure 3. Une telle unité peut comprendre par exemple un puissance-mètre et être configurée pour monitorer la ou les valeurs de la puissance moyenne totale *Pₙ* des signaux optiques modulés S₁₋ₙ en sortie du système de modulation de signal 120.

L'application des différentes puissances moyennes totales *Pₙ* résultantes par l'atténuateur optique variable 126 peut ainsi être contrôlée par l'unité de pilotage 130 et/ou l'unité de contrôle de la puissance 140 du système de modulation de signal 120.

Une valeur unique de puissance moyenne totale, ou une plage de valeur des différentes puissances moyennes totales, *Pₙ* peut être comprise, par exemple et sans limitations, entre quelques mW et une centaine de mW.

La suite de la description sera faite en considérant l'exemple d'un composant optique 200 correspondant à un guide d'onde optique de longueur de guide *L*. Par exemple et sans limitations, le composant optique 200 peut être défini dans un repère orthogonal (x,y,z). En particulier, le composant optique 200 peut être défini linéairement selon l'axe z̅ du repère orthogonal.

De façon générale, l'amplitude *E*(0, *t*) du champ électrique relative à un signal optique modulé S₁₋ₙ à l'entrée du composant optique 200 (c'est-à-dire à une valeur de coordonnée *z* = 0) et à l'instant t peut être définie selon l'équation (05) suivante :
$E \left(0, t\right) = {A}_{0} \left(0\right) {e}^{- {iω}_{0} t} + {A}_{+ 1} \left(0\right) {e}^{- {iω}_{+ 1} t} + {A}_{- 1} \left(0\right) {e}^{- {iω}_{- 1} t}$ (05)

Dans l'équation (05) précédente, les amplitudes A₀(0), A₊₁(0) et A₋₁(0) à l'entrée du composant optique 200 peuvent être exprimées en particulier à partir des grandeurs 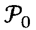 et 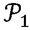 . La grandeur 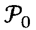 correspond à la puissance de la composante du signal S₁₋ₙ associée à la fréquence angulaire *ω*₀, et la grandeur 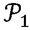 correspond à la puissance des composantes du signal S₁₋ₙ associée à chacune des bandes latérales de fréquence angulaire ω_{±1}. Avantageusement, les grandeurs 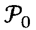 et 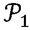 peuvent être reliées entre elles selon l'équation (06) suivante :
$\sqrt{{P}_{1}} = {a}_{m} \times \sqrt{{P}_{0}}$ (06)

Dans l'équation (06) précédente, la grandeur *aₘ* correspond à l'amplitude de modulation du signal optique initial S₀ par l'onde sinusoïdale. Par exemple, la valeur de l'indice de modulation *aₘ* peut être définie ou prédéfinie par le modulateur optique 122 et/ou l'unité de pilotage 130 du système de modulation de signal 120. Ainsi, une valeur de la puissance moyenne totale *Pₙ* d'un signal optique modulé S₁₋ₙ considéré en sortie du système de modulation de signal 120 peut être définie par l'équation (07) suivante :
${P}_{n} = {P}_{0} \times \left(1+2{{a}_{m}}^{2}\right)$ (07)

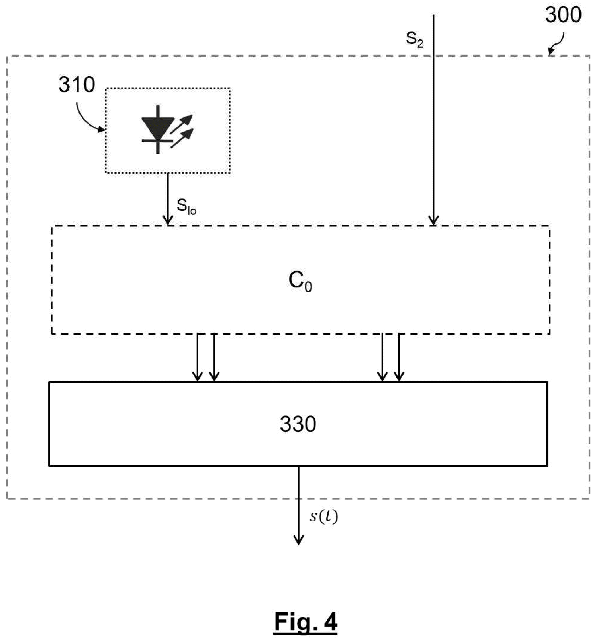

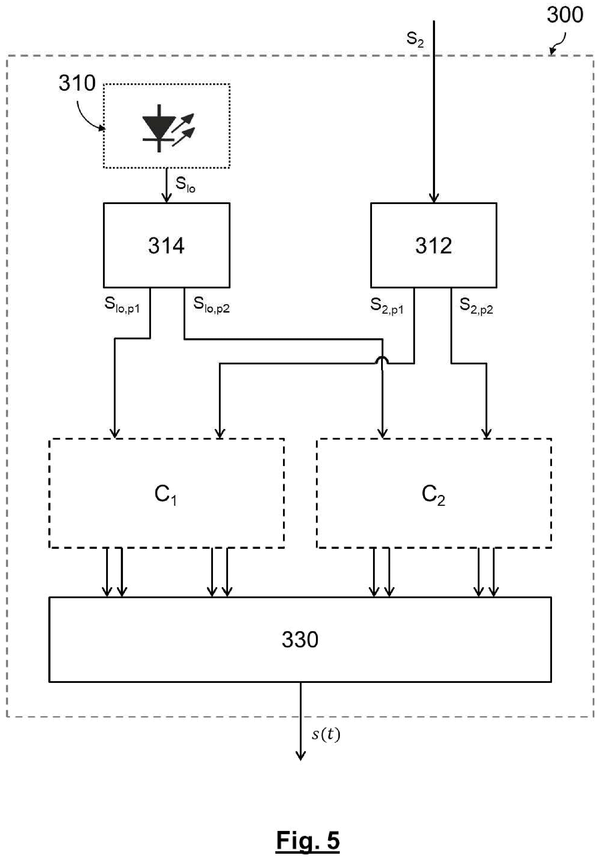

Les figures 4 et 5 représentent schématiquement un détecteur cohérent 300 comprenant une source optique secondaire 310, au moins une chaîne de traitement C₀ (ou C₁ et C₂) et un ensemble de détecteurs de signaux optiques 330, selon des modes de réalisation de l'invention.

La source optique secondaire 310 est configurée pour générer un faisceau laser monochromatique correspondant au signal optique de référence Sₗₒ de fréquence angulaire de référence notée *ωₗₒ.* utilisée comme oscillateur local (ou champ électromagnétique de référence) du détecteur cohérent 300.

Avantageusement, la fréquence angulaire de référence *ωₗₒ* peut être approximativement égale à la fréquence angulaire initiale *ω*₀ du signal optique initial S₀ issue de la source optique initiale 210. Par exemple et sans limitations, la source optique secondaire 310 peut être une diode laser ayant une longueur d'onde fixée à 1550nm. De façon concrète, le signal optique de référence Sₗₒ peut présenter un décalage fréquentiel ΔΩ par rapport au signal optique initial S₀. Par exemple et sans limitations, un tel décalage peut être une valeur comprise de préférence entre 1 MHz - 1 GHz.

Dans des modes de réalisation, un détecteur cohérent 300 peut comprendre une unique chaîne de traitement C₀, telle que représentée sur la figure 4. Ceci peut être le cas si les polarisations des champs électriques du signal optique de référence Sₗₒ et de chaque signal optique utile S₂₋ₙ en sortie du composant optique 200 sont identiques. Par exemple et sans limitations, le détecteur cohérent 300 peut comprendre en outre deux contrôleurs de polarisation (non représentés sur les figures) disposés respectivement sur le chemin optique des signaux optiques utiles S₂₋ₙ et le chemin optique du signal optique de référence Sₗₒ.

L'unique chaîne de traitement C₀ peut donc prendre en entrée, d'une part, le signal optique de référence Sₗₒ et, d'autre part, les signaux optiques utiles S₂₋ₙ, comme représenté sur la figure 4.

Dans d'autres modes de réalisation, un détecteur cohérent 300 peut comprendre une première chaîne de traitement C₁ et une deuxième chaîne de traitement C₂, comme représenté sur la figure 5. Dans ce cas, le détecteur cohérent 300 peut comprendre en outre un premier séparateur de faisceau optique polarisant 312 et un premier séparateur de faisceau optique polarisant 314. Les deux séparateurs de faisceau polarisants 312 et 314 peuvent être configurés pour diviser un faisceau optique en deux faisceaux optiques distincts comprenant un premier faisceau optique polarisé selon une première polarisation p1 et un deuxième faisceau optique polarisé selon une deuxième polarisation p2. Par exemple et sans limitations, la première polarisation p1 peut être défini selon l'axe x̅ du repère orthogonal (x,y,z) dans lequel est placé le composant 200 et la deuxième polarisation p2 peut être défini selon l'axe y̅ du repère orthogonal.

Avantageusement, le premier séparateur de faisceau polarisant 312 peut être positionné sur le chemin optique des signaux optiques utiles S₂₋ₙ pour former un premier faisceau optique polarisé de signaux modulés S_{2.p1-n} (ou plus simplement S_{2.p1} ou S_{2.x}) et un deuxième faisceau optique polarisé de signaux modulés S_{2.p2-n} (ou plus simplement S_{2.p2} ou S_{2.y}). Similairement, le deuxième séparateur de faisceau polarisant 314 peut être positionné sur le chemin optique du signal optique de référence Sₗₒ pour former un premier faisceau optique polarisé de référence S_{lo.p1} (ou S_{lo.x}) et un deuxième faisceau optique polarisé de référence S_{lo.p2} (ou Sl_{o.y}).

La première chaîne de traitement C₁ prend alors en entrée les faisceaux optiques polarisés selon la première polarisation p1, c'est-à-dire, d'une part, le premier faisceau optique polarisé de référence S_{lo.p1} et, d'autre part, le premier faisceau optique polarisé de signaux modulés S_{2.p1}, comme représenté sur la figure 5. La deuxième chaîne de traitement C₂ prend en entrée les faisceaux optiques polarisés selon la deuxième polarisation p2, c'est-à-dire, d'une part, le deuxième faisceau optique polarisé de référence S_{lo.p2} et, d'autre part, le deuxième faisceau optique polarisé de signaux modulés S_{2.p2}, comme représenté sur la figure 5.

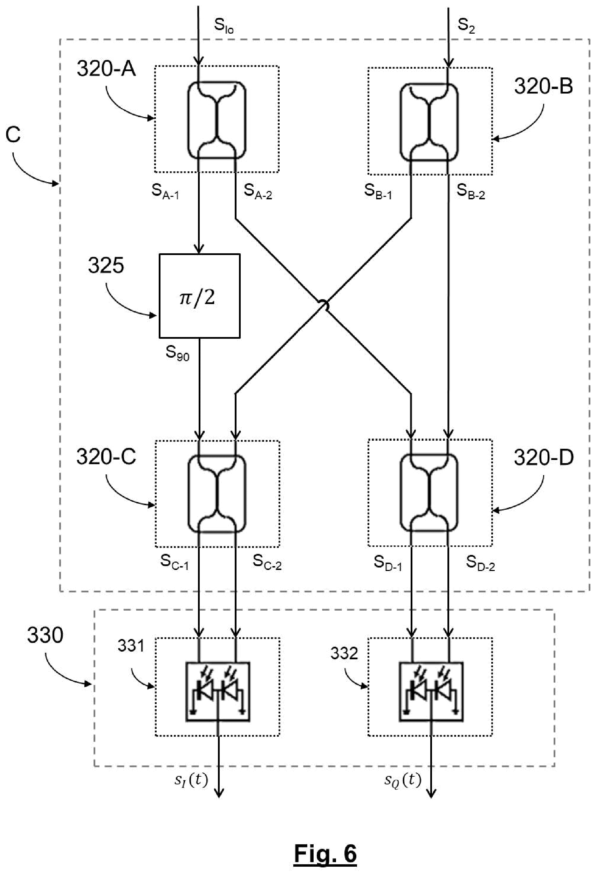

L'unique chaîne de traitement C₀, la première chaîne de traitement C₁ et la deuxième chaîne de traitement C₂ ont des structures matérielles identiques. La figure 6 représente ainsi schématiquement une chaîne de traitement, notée simplement C formant un système appelé 'circuit hybride 90°', et une partie au moins de l'ensemble de détecteurs 330.

Avantageusement, une chaîne de traitement C du détecteur cohérent 300 comprend quatre coupleurs 320-A, 320-B, 320-C et 320-D et un déphaseur 325.

En particulier, les deux coupleurs d'entrée 320-A et 320-B peuvent être des coupleurs 3 dB configurés pour prendre en entrée un faisceau optique et générer en sortie deux faisceaux optiques selon un rapport de division de puissance de 3 dB (i.e. d'amplitude égale et selon une puissance deux fois inférieure à celle du faisceau optique d'entrée).

Tel que représenté sur la figure 6, le premier coupleur 320-A de la chaîne de traitement C peut prendre en entrée un faisceau optique relatif au signal optique de référence, c'est-à-dire le signal optique de référence Sₗₒ (chaîne C₀), le premier faisceau optique polarisé de référence S_{lo.p1} (chaîne C₁), ou le deuxième faisceau optique polarisé de référence S_{lo.p2} (chaîne C₂). Le premier coupleur 320-A de la chaîne de traitement C peut être en outre configuré pour délivrer un premier faisceau optique intermédiaire S_{A-1} et un deuxième faisceau optique intermédiaire S_{A-2}. De même, le deuxième coupleur 320-B de la chaîne de traitement C peut prendre en entrée un faisceau optique relatif aux signaux optiques utiles, c'est-à-dire les signaux optiques utiles S₂₋ₙ (chaîne C₀), le premier faisceau optique polarisé des signaux optiques utiles S_{2.p1} (chaîne C₁), ou le deuxième faisceau optique polarisé des signaux optiques utiles S_{2.p2} (chaîne C₂). Le deuxième coupleur 320-B de la chaîne de traitement C peut alors être configuré pour délivrer un troisième faisceau optique intermédiaire S_{B-1} et un quatrième faisceau optique faisceau intermédiaire S_{B-2}.

Avantageusement, le déphaseur 325 peut être un déphaseur π/2. Dans des modes de réalisation, une chaîne de traitement C du détecteur cohérent 300 est configurée pour transmettre l'un des faisceaux optiques intermédiaires issu du signal optique de référence (par exemple le premier faisceau intermédiaire S_{A-1} issu du premier coupleur 320-A comme représenté sur la figure 6) au déphaseur 325 pour appliquer un déphasage π/2 à ce faisceau optique intermédiaire. Le déphaseur 325 est alors configuré pour délivrer un faisceau optique intermédiaire déphasé S₉₀.

Les deux coupleurs de sortie 320-C et 320-D peuvent également être des coupleurs 3 dB configurés pour prendre en entrée deux faisceaux optiques intermédiaires distincts et générer en sortie deux autres faisceaux optiques à détecter. Tel que représenté sur la figure 6, le troisième coupleur 320-C de la chaîne de traitement C peut prendre en entrée le faisceau optique intermédiaire déphasé S₉₀ issu du déphaseur 325 et le troisième optique intermédiaire S_{B-1} issu deuxième coupleur 320-B. Les deux faisceaux signal S_{C-1} et S_{C-2} en sortie du troisième coupleur 320-C correspondent alors respectivement à la somme et la différence des deux champs électriques des faisceaux optiques d'entrée de la chaîne de traitement C (i.e. d'une part du faisceau relatif au signal optique de référence Sₗₒ et d'autre part du faisceau relatif aux signaux optiques utiles S₂₋ₙ). De même, le quatrième coupleur 320-D de la chaîne de traitement C peut prendre en entrée le deuxième faisceau optique intermédiaire S_{A-2} issu du premier coupleur 320-A et le quatrième faisceau optique intermédiaire S_{B-2} issu deuxième coupleur 320-B. Les deux faisceaux signal S_{D-1} et S_{D-2} en sortie du quatrième coupleur 320-D correspondent alors à la somme et à la différence du champ électrique du faisceau optique d'entrée de la chaîne de traitement C relatif aux signaux optiques utiles S₂₋ₙ avec une réplique déphasée de π/2 du champ électrique du faisceau optique d'entrée relatif au signal optique de référence Sₗₒ.

Comme représenté sur la figure 6, l'ensemble de détecteurs 330 comprend au moins deux paires 331 et 332 de photodiodes équilibrées (c'est-à-dire identiques), chaque paire étant associée à un coupleur de sortie (320-C ou 320-D) d'une chaîne de traitement C du détecteur cohérent 300. En d'autres termes, pour un détecteur cohérent 300 comprenant une unique chaîne de traitement C₀ (i.e. un unique circuit hybride 90°), l'ensemble de détecteurs 330 comprend deux paires de photodiodes équilibrées, tandis que pour un détecteur cohérent 300 comprenant une première et une deuxième chaîne de traitement C₁ et C₂ (i.e. deux circuits hybrides 90°), l'ensemble de détecteurs 330 comprend quatre paires de photodiodes équilibrées.

Une première paire de photodiodes équilibrées (par exemple 331) d'un circuit hybride 90° du détecteur cohérent 300 peut donc être configuré pour délivrer le premier signal électrique s*_{I}*(t). Ce premier signal peut correspondre à la détection de la composante réelle du signal complexe *s*(*t*) (chaîne C₀), ou à une décomposition de la composante réelle du signal complexe *s*(*t*) selon une polarisation prédéfinie (chaîne C₁ selon une première polarisation p1, par exemple : ${s}_{I}^{x} \left(t\right)$ - ou chaîne C₂ selon une deuxième polarisation p2, par exemple : ${s}_{I}^{y} \left(t\right)$). Une deuxième paire de photodiodes équilibrées (par exemple 332) d'un circuit hybride 90° du détecteur cohérent 300 peut être configurée pour délivrer le deuxième signal électrique *s_{Q}*(t). Ce deuxième signal peut correspondre à la détection de la composante imaginaire du signal complexe *s(t)* (chaîne C₀), ou une décomposition de la composante imaginaire du signal complexe *s*(*t*) selon une polarisation prédéfinie (chaîne C₁ selon une première polarisation p1 par exemple : ${s}_{Q}^{x} \left(t\right)$ - ou chaîne C₂ selon une deuxième polarisation p2 par exemple : ${s}_{Q}^{y} \left(t\right)$).

Pour chaque signal optique utile S₂, un circuit hybride 90° peut donc être configuré pour générer les signaux électriques *s_{I}*(t) (ou ${s}_{I}^{x} \left(t\right)$ ou $\left.{s}_{I}^{y}\left(t\right)\right)$ et s*_{Q}*(t) (ou ${s}_{Q}^{x} \left(t\right)$ ou ${s}_{Q}^{y} \left(t\right)$). En d'autres termes, pour un détecteur cohérent 300 comprenant une unique chaîne de traitement C₀ (i.e. un unique circuit hybride 90°), le détecteur cohérent 300 est configuré pour délivrer N signaux électriques s*_{I}*(t) et s*_{Q}*(t). Pour un détecteur cohérent 300 comprenant une première et une deuxième chaîne de traitement C₁ et C₂ (i.e. deux circuits hybrides 90°), le détecteur cohérent 300 est configuré pour délivrer N signaux électriques ${s}_{I}^{x} \left(t\right) , {s}_{Q}^{x} \left(t\right) , {s}_{I}^{y} \left(t\right)$, et ${s}_{Q}^{y} \left(t\right)$. Les N signaux complexes ${s}_{n}^{x} \left(t\right)$ selon la première polarisation et N signaux complexes ${s}_{n}^{y} \left(t\right)$ selon la deuxième polarisation sont alors être définis selon les équations (08) et (09) suivantes :
${s}_{n}^{x} \left(t\right) = {s}_{I}^{x} \left(t\right) + i . {s}_{Q}^{x} \left(t\right)$ (08)
${s}_{n}^{y} \left(t\right) = {s}_{I}^{y} \left(t\right) + i . {s}_{Q}^{y} \left(t\right)$ (09)

Dans des modes de réalisation, le détecteur cohérent 300 peut comprendre en outre une unité de visualisation des signaux complexes 340 (non représentée sur les figures). Une telle unité 340 peut être par exemple un oscilloscope en temps réel paramétré selon avec un taux d'échantillonnage de 100 G éch./s et une bande passante électrique de 33 GHz.

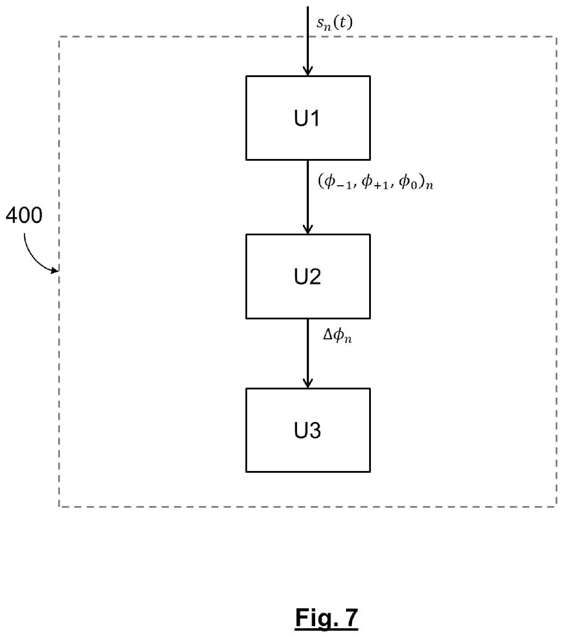

La figure 7 représente schématiquement le dispositif d'analyse 400, selon des modes de réalisation de l'invention. Le dispositif d'analyse 400 comprend différentes unités de traitement de l'ensemble de N signaux complexes s*ₙ*(t) délivrés par le dispositif de détection optique cohérente 300, selon des modes de réalisation de l'invention.

Avantageusement, le dispositif d'analyse 400 du système 10 peut comprendre une première unité de traitement U1, une deuxième unité de traitement U2 et une troisième unité de traitement U3, configurée chacune pour exécuter un traitement de l'ensemble de N signaux complexes s*ₙ*(t).

Plus précisément, pour chaque signal complexe s(t), la première unité de traitement U1 du dispositif d'analyse 400 peut être configurée pour déterminer des paramètres de phases *ϕ*_{*-*1}, *ϕ*₊₁ et *ϕ*₀ relatives aux différentes raies spectrales des bandes de fréquences latérales, *ω*₋₁ et *ω*₊₁, et de la fréquence porteuse *ω*₀ respectivement.

Pour cela, dans des modes de réalisation, la première unité de traitement U1 peut être configurée pour déterminer une transformée de Fourier FT*ₙ* de chaque signal complexe *s*(*t*) délivré par le détecteur cohérent 300. Par exemple et sans limitations, la première unité de traitement U1 peut être configurée pour déterminer une première transformée de Fourier FT₁ d'un premier signal complexe *s*₁(*t*) issu de la mesure de détection cohérente du premier signal optique utile S₂₋₁, puis pour déterminer, ensuite, une deuxième transformée de Fourier FT₂ d'un deuxième signal complexe s₂(t) issu de la mesure de détection cohérente du deuxième signal optique utile S₂₋₂.

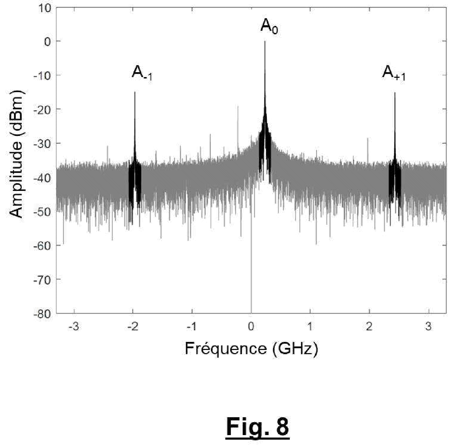

La figure 8 représente un exemple d'une transformée de Fourier d'un signal complexe issu d'une mesure de détection cohérente. Dans cet exemple d'acquisition expérimentale, le signal optique modulé est défini par une fréquence *f* égale à 2 GHz et une puissance moyenne totale *Pₙ* égale à 25 mW en sortie du générateur de signal optique 100. Dans cet exemple, le composant optique 200 à caractériser est une fibre hautement non linéaire. Comme illustré sur la figure 8, un tel spectre comprend trois raies spectrales. Chaque raie spectrale correspond au décalage fréquentiel entre la fréquence angulaire de référence *ωₗₒ* du signal optique de référence Sₗₒ et une des bandes de fréquences latérales, *ω*₋₁ et *ω*₊₁, ou de la fréquence porteuse *ω*₀ d'un signal optique utile S₂₋ₙ. En particulier, la figure 8 illustre directement le décalage fréquentiel ΔΩ entre *ωₗₒ* et *ω*₀ (égale à 200 MHz) au niveau de la position fréquentielle de la raie spectrale centrale.

La première unité de traitement U1 peut être configurée pour identifier chacune des raies spectrales des données spectrales FT*ₙ* relatives à la transformée de Fourier de chaque signal complexe s*ₙ*(*t*) et leur appliquer un filtrage spectral, pour générer N ensembles de données spectrales filtrées FT.f*ₙ*. Un tel filtrage peut notamment être un filtrage passe-bande, par exemple et sans limitation de 100 MHz (filtrage spectral étroit), appliqué autour d'une raie spectrale identifiée des données FT*ₙ*.

La première unité de traitement U1 peut être en outre configurée pour calculer une transformée de Fourier inverse des données spectrales filtrées FT.f*ₙ*, pour chaque signal complexe s*ₙ*(*t*) considéré, pour former N signaux temporels complexes corrigés s'ₙ(t). Avantageusement, la transformée de Fourier inverse peut être appliquée individuellement à chacune des raies spectrales identifiées et filtrées des données FT*ₙ*. Un signal complexe corrigé s'ₙ(t) correspond alors à une décomposition du signal en trois termes.

Pour chaque signal complexe *sₙ*(*t*), la première unité de traitement U1 peut être en outre configurée pour déterminer l'argument *arg* de chacun des termes du signal complexe corrigé *s'ₙ*(*t*) obtenus.

Dans des modes de réalisation où le détecteur cohérent 300 comprend une unique chaîne de traitement C₀ (i.e. polarisations des champs électriques des signaux Sₗₒ et S₂₋ₙ identiques), les trois paramètres de phase *ϕ*₀, *ϕ*₋₁*, ϕ*₊₁ (ou quantités de phase *ϕ*ₖ avec *k* = -1, 0 ou +1) correspondent chacun à l'argument *arg* d'un des trois termes du signal complexe corrigé s'ₙ(t).

Il est à noter que l'indice *k* est égal à -1, 0 ou +1 et est relatif aux bandes de fréquences latérales, *ω*₋₁ et *ω*₊₁, ou à la fréquence porteuse *ω*₀.

Dans des modes de réalisation où le détecteur cohérent 300 comprend une première et une deuxième chaîne de traitement C₁ et C₂, la détermination de l'argument *arg* de chacun des termes du signal complexe corrigé s'ₙ(t) fournit une première composante de paramètre de phase ${ϕ}_{k}^{x}$ et une deuxième composante de paramètre de phase ${ϕ}_{k}^{y}$, associées respectivement au signal complexe ${s}_{n}^{x} \left(t\right)$ selon la première polarisation et au signal complexe ${s}_{n}^{y} \left(t\right)$ selon la deuxième polarisation.

Selon certains modes de réalisation, chacun des trois paramètres de phase *ϕ*₀, *ϕ*₋₁, *ϕ*₊₁ peut être défini à partir de la première et la deuxième composantes de paramètre de phase ${ϕ}_{k}^{x}$ et ${ϕ}_{k}^{y}$*.* En particulier, un paramètre de phase *ϕ*ₖ peut correspondre à la phase moyenne entre les première et deuxième composantes de paramètre de phase selon l'équation (10) suivante :
${ϕ}_{k}^{+} = \frac{1}{2} \times \left({ϕ}_{k}^{x}+{ϕ}_{k}^{y}\right)$ (10)

Alternativement, un paramètre de phase *ϕₖ* peut correspondre à un déphasage entre la première composante de paramètre de phase et la deuxième composante de paramètre de phase selon l'équation (11) suivante :
${ϕ}_{k}^{-} = \frac{1}{2} \times \left({ϕ}_{k}^{x}-{ϕ}_{k}^{y}\right)$ (11)

Avantageusement, le paramètre de phase *ϕₖ* noté sans exposant « + » ou « - » peut faire référence notamment au paramètre de phase *ϕₖ* défini selon l'équation (10) ou à l'équation (11).

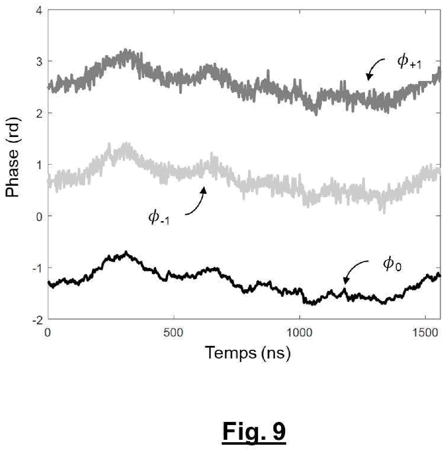

La figure 9 illustre l'évolution temporelle de trois paramètres de phase *ϕₖ* déterminés, provenant de l'acquisition expérimentale sur 1,5 µs d'un signal complexe issu d'une mesure de détection cohérente. Dans cet exemple, le signal optique a été modulé selon une puissance moyenne totale *Pₙ* et une fréquence de modulation Δ*ω* constantes au cours du temps. Il est à noter qu'au cours d'une acquisition et comme illustré sur la figure 9, chacun des paramètres de phase *ϕ*₀, *ϕ*₋₁, *ϕ*₊₁ peut varier au cours du temps. Cependant, comme observée sur la figure 9, les trois paramètres de phase *ϕₖ* sont sujets aux mêmes perturbations, c'est-à-dire aux perturbations environnementales et aux perturbations dues aux bruits de phase des deux sources optiques (comprenant la source optique initiale 110 et la source optique secondaire 310). Il est à noter que sur la figure 9, les données représentées pour les deux quantités de phase *ϕ*_{*-*1} et *ϕ*₊₁ (bandes latérales) semblent présentées des niveaux de bruit plus importants que la quantité de phase *ϕ*₀ (fréquence porteuse), probablement en raison du fait que la quantité de phase *ϕ*₀ est associée à un plus faible indice de modulation menant à un plus petit rapport signal sur bruit.

Pour chaque signal complexe *s*(*t*), la deuxième unité de traitement U2 du dispositif d'analyse 400 peut être configurée pour déterminer la valeur Δ*ϕ* du paramètre de déphasage, à partir d'une combinaison linéaire d'au moins des premier et deuxième paramètres de phase *ϕ*_{*-*1} et *ϕ*_{*+*1} déterminées. En particulier, dans des modes de réalisation, pour chaque signal complexe *s*(*t*), la deuxième unité de traitement U2 peut être configurée pour déterminer la valeur *Δϕ*⁽³⁾ du paramètre de déphasage à trois ondes selon l'équation de détermination du déphasage à trois ondes (03). Dans d'autres modes de réalisation, pour chaque signal complexe *s*(*t*), la deuxième unité de traitement U2 peut être configurée pour déterminer la valeur *Δϕ*⁽²⁾ du paramètre de déphasage à deux ondes selon l'équation de détermination du déphasage à deux ondes (04).

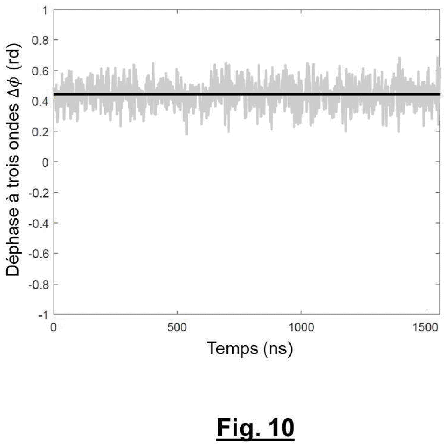

La figure 10 illustre l'évolution temporelle du paramètre de déphasage à trois ondes *Δϕ*⁽³⁾ déterminé à partir des quantités de phase *ϕ*₀, *ϕ*₋₁, *ϕ*₊₁, provenant de l'acquisition expérimentale sur 1,5 µs d'un signal complexe issu d'une mesure de détection cohérente. Comme précédemment, dans cet exemple de la figure 10, le signal optique a été modulé selon une puissance moyenne totale *Pₙ* et une fréquence de modulation Δ*ω*, constantes au cours du temps.

Malgré la variation de chacune des quantités de phase *ϕ*₀, *ϕ*₋₁, *ϕ*₊₁ apparente sur la figure 9, la valeur du paramètre de déphasage Δ*ϕ* est indépendante du temps comme illustré sur la figure 10. En particulier, la valeur Δ̅*̅ϕ̅*̅ de la moyenne du paramètre de déphasage à trois ondes est indépendante du temps - cette valeur Δ̅*̅ϕ̅*̅ correspond aux données représentées en noire sur la figure 10. Ainsi, la valeur du paramètre de déphasage Δ*ϕ* est indépendante de toute fluctuation aléatoire des phases des deux sources optiques. Sur la figure 10, les fluctuations rapides restantes du paramètre de déphasage Δ*ϕ* (données représentées en gris sur la figure 10) sont dues au bruit de détection.

Il est à noter que le paramètre de déphasage Δ*ϕ* décrit selon l'équation de détermination du déphasage à trois ondes (03) ou selon l'équation de détermination du déphasage à deux ondes (04) est une quantité indépendante du temps, et ne dépend pas non plus du bruit de phase *ϕₗₒ* du signal optique de référence Sₗₒ, ni de la phase initiale *ϕᵢ* du signal optique à mesurer ou de n'importe quelles fluctuations de phase aléatoires issues de la configuration du système de caractérisation 10. Dans ces conditions, la quantité de déphasage Δ*ϕ* est une valeur 'mesurable' stable qui permet de déterminer certaines propriétés optiques du composant optique 200.

Avantageusement, chaque signal optique modulé S₁₋ₙ en sortie du générateur de signal optique 100 peut être caractérisé par une durée de signal Δ*t.* Ainsi, pour chaque signal complexe *s*(*t*), la deuxième unité de traitement U2 peut être configurée pour déterminer la valeur de la moyenne du paramètre de déphasage Δ̅*̅ϕ̅*̅ sur la durée de signal Δ*t.*

La troisième unité de traitement U3 du dispositif d'analyse 400 peut être configurée pour effectuer une régression mathématique de l'ensemble des N valeurs Δ*ϕₙ* (ou Δ̅*̅ϕ̅ₙ̅*̅) du paramètre de déphasage par rapport aux N valeurs du paramètre de différenciation appliqué pour générer les N signaux optiques modulés S₁₋ₙ.

Par exemple et sans limitations, une telle régression mathématique peut être une régression linéaire (ou un ajustement linéaire) effectuée selon la méthode présentée dans l'article "Unified equations for the slope, intercept, and standard errors of the best straight line" de D. York et. al., Am. J. Phys. 72, 367-375, 2004.

Dans des modes de réalisation où le paramètre de différenciation est la puissance moyenne totale *Pₙ* des signaux optiques modulés S₁₋ₙ en sortie du générateur de signal optique 100 et où la propriété optique est le coefficient non linéaire *γ* du composant optique 200, la régression mathématique effectuée par la troisième unité de traitement U3 peut être une régression linéaire des N valeurs ${Δϕ}_{n}^{\left(3\right)}$ (ou $\overline{{Δϕ}_{n}^{\left(3\right)}}$) du paramètre de déphasage à trois ondes, par rapport auxdites N valeurs *Pₙ* du paramètre de différenciation. Une équation d'extraction du coefficient non linéaire *γ* reliant le paramètre de déphasage à trois ondes ${Δϕ}_{n}^{\left(3\right)}$ et la puissance moyenne totale *Pₙ* peut avantageusement être définie par la relation (12) suivante :
${Δϕ}_{n}^{\left(3\right)} = \left({P}_{n}\times \left[γ\times 4.{L}_{eff}\right]\right) + \left({β}_{2}\times L\times {Δω}^{2}\right)$ (12)

Dans l'équation (10), *β*₂ correspond à la dispersion chromatique du composant optique 200.

Avantageusement, les N valeurs ${Δϕ}_{n}^{\left(3\right)}$ du paramètre de déphasage à trois ondes déterminées puis utilisées dans la régression linéaire effectuée selon l'équation (12) peuvent être issues des quantités de phase ${ϕ}_{k}^{+}$ associées à la phase moyenne entre les première et deuxième composantes de paramètre de phase selon l'équation (10).

En outre, notamment dans l'équation (12), *L_{eff}* correspond à la longueur effective du composant optique 200 traversée par lesdits signaux optiques modulés S₁₋ₙ. En particulier, cette longueur effective *L_{eff}* peut être définie en fonction de la longueur de guide *L* (i.e. longueur physique) du composant optique 200, lorsqu'il correspond à un guide d'onde optique, telle que :
${L}_{eff} = \frac{1}{α} \left(1-{e}^{- α \times L}\right)$ (13)

Dans l'équation (13), *α* correspond à une valeur de coefficient de perte du composant optique 200 correspondant à un guide d'onde optique.

Ainsi, dans les modes de réalisation, la troisième unité de traitement U3 peut être configurée pour estimer un coefficient directeur *δ* (ou pente), obtenu à partir de la droite de régression *Δϕₙ*(*Pₙ*) (ou droite d'interpolation) générée en réponse à l'opération de régression linéaire. La valeur du coefficient non linéaire *γ* du composant optique 200 est alors évaluée à partir du coefficient directeur, telle que :
$γ = δ \times \frac{1}{4 . {L}_{eff}}$ (14)

L'équation d'extraction du coefficient non linéaire *γ* (12) peut être retrouvée à partir de l'amplitude *E*(*L*, *t*) du champ électrique relative à un signal optique utile S₂₋ₙ à la sortie du composant optique 200 (c'est-à-dire à une valeur de coordonnée z = L) et à l'instant t, qui peut par exemple être définie selon l'équation (15) suivante :
$E \left(L, t\right) = \left(\sqrt{{P}_{0}}{e}^{{iϕ}_{0}}+\sqrt{{P}_{1}}{e}^{{iϕ}_{+ 1}}+\sqrt{{P}_{1}}{e}^{{iϕ}_{- 1}}\right) {e}^{- αL / 2} {e}^{- {iω}_{0} t}$ (15)

Dans l'équation (15) précédente, les paramètres de phase *ϕ*₀, *ϕ*₋₁, *ϕ*₊₁ représentent des décalages de phases totaux (c'est-à-dire linéaires et non linéaires) accumulés par chaque onde (de fréquence *ω*₀, *ω*₋₁, *ω*₊₁ respectivement) pendant la propagation des signaux optiques modulés S₁₋ₙ dans le composant optique 200.

Les quantités de phase *ϕ*₀, *ϕ*₋₁, *ϕ*₊₁ peuvent par exemple être exprimés selon les équations (16) et (17) suivantes :
${ϕ}_{0} = {φ}_{0} + {β}_{0} L + γ \left({P}_{0}+6{P}_{1}\right) {L}_{eff}$ (16)
${ϕ}_{\pm 1} = {φ}_{0} ∓ {φ}_{m} + {β}_{0} L ∓ Δω \left(t-{β}_{1}L\right) + 3 γ \left({P}_{0}+{P}_{1}\right) {L}_{eff} + \frac{1}{2} {β}_{2} {Δω}^{2} L$ (17)

Dans ces expressions, les différents éléments *βᵢ* (avec *i =* 0, 1 ou 2) peuvent être issus de la constante de propagation *β*(*ω*) développée en série de Taylor autour de la fréquence porteuse *ω*₀. En particulier, le terme *β*₀ correspond à la valeur de la constante de propagation à ω₀, le terme *β*₁ correspond à l'inverse de la vitesse de groupe à *ω*₀, et le terme *β*₂ correspond à la valeur de la dispersion de vitesse de groupe à *ω*₀ (c'est-à-dire la dispersion chromatique, une des propriétés de l'ensemble des propriétés optiques du composant optique 200 à caractériser). Avantageusement, les termes de dispersion d'ordre supérieur peuvent être négligés.

Les paramètres de phase *ϕ*₀, *ϕ*₋₁, *ϕ*_{*+*1} exprimés selon les équations (16) et (17) comprennent plusieurs contributions. En particulier, le terme *Δωt* est dépendant du temps dans les expressions des paramètres de phase *ϕ*_{*-*1} et *ϕ*₊₁, les grandeurs *φ*₀ et *φₘ* sont des phases reliées aux amplitudes A₀(0), A₊₁(0) et A₋₁(0) de signal en entrée du composant optique 200 qui ne peuvent pas être contrôlées expérimentalement a priori et peuvent être considérées ici comme des variables aléatoires. Ainsi la mesure de chacune des quantités de phase *ϕ*₀, *ϕ*₋₁, *ϕ*₊₁ considérées isolément, ne peut pas donner accès à des valeurs de propriété optiques du composant optique 200 car ces quantités reposent sur le comportement aléatoire de certaines contributions. Cependant, la combinaison des expressions (16) et (17) selon l'équation de détermination du déphasage à trois ondes (03) permet d'obtenir l'équation (18) suivante, indépendante des variations temporelles et des fluctuations aléatoires présentes dans chacun des paramètres de phase *ϕ*₀, *ϕ*₋₁, *ϕ*_{*+*1} :
$Δϕ = 2 γ \left(2{P}_{0}-3{P}_{1}\right) {L}_{eff} + {β}_{2} {Δω}^{2} L$ (18)

En utilisant les expressions de puissances (06) et (07) et cette équation (18), il est possible de retrouver l'équation d'extraction du coefficient non linéaire *γ* (12).

Il peut également être noté que les équations (16) et (17), relatives aux paramètres de phase *ϕ*₀, *ϕ*₋₁, *ϕ*₊₁, peuvent être obtenues à partir d'une description de l'évolution de l'amplitude A(z, t) du champ électrique relatif au signal optique modulé S₁₋ₙ se propageant dans le composant optique 200 à une valeur de coordonnée z et à l'instant t.

Dans un guide d'onde optique, l'évolution de l'amplitude A(z, t) obéit à l'équation de Schrödinger non linéaire. Il est à noter que dans les conditions du système 10, l'amplitude A(z, t) est composée de trois ondes monochromatiques équidistantes (de fréquence *ω*₀, *ω*₋₁, *ω*₊₁), il est possible d'utiliser les équations couplées non linéaires de dégénérescence FWM à état stable. Ces équations décrivent les évolutions des amplitudes A₀(z), A₊₁(z) et A₋₁(z) de signal se propageant dans le composant optique 200 sous l'influence des effets de perte et de l'effet Kerr, permettant ainsi de dériver des expressions analytiques pour décrire des décalages de phase non linéaires notamment. Il peut être considéré ici qu'aucune fréquence supplémentaire (différente des fréquences *ω*₀, *ω*₋₁, *ω*₊₁) n'est générée le long du guide d'onde optique. Cette condition reste vraie tant que les effets non linéaires sont faibles au cours de la propagation d'un signal le long du guide d'onde optique. En pratique, cela peut être réalisé en limitant la puissance du signal à injecter dans le guide d'onde optique à la valeur maximale d'une plage prédéfinie de valeur des différentes puissances moyennes totales *Pₙ.* guide d'onde optique est suffisamment faible pour négliger le décalage de phase.

Dans des modes de réalisation, par exemple pour la régression linéaire *Δϕₙ*(*Pₙ*), une régression mathématique appliquée par la troisième unité de traitement U3 peut être effectuée en prenant une plage de valeurs discrètes de puissances moyenne modifiées, ou une unique valeur de puissance moyenne modifiée, *Pₙ'* définie(s) en utilisant l'équation (19) suivante :
${P}_{n} ′ = {P}_{n} \times \left[\frac{2 - \left(3\times {{a}_{m}}^{2}\right)}{2 + \left(4\times {{a}_{m}}^{2}\right)}\right]$ (19)

Selon l'équation (19) précédente, une valeur de puissance moyenne modifiée *Pₙ'Pₙ* si l'amplitude de modulation *aₘ* est très petite (ce qui peut être le cas en pratique), par exemple définie selon l'inégalité suivante :
${a}_{m} ≪ 1$ (20)

Avantageusement, pour des valeurs d'amplitude de modulation *aₘ* ne vérifiant pas l'équation (20), pour chaque signal complexe *sₙ*(*t*), la première unité de traitement U1 peut être en outre configurée pour déterminer l'amplitude de modulation *aₘ* à partir de la détermination du module de chacun des termes du signal complexe corrigé s'ₙ(t) obtenus. Une détermination du module permet notamment de déterminer une amplitude de crête A₀(L) ou A_{±1}(L) relative aux signaux optiques utiles S₂₋ₙ à la sortie du composant optique 200.

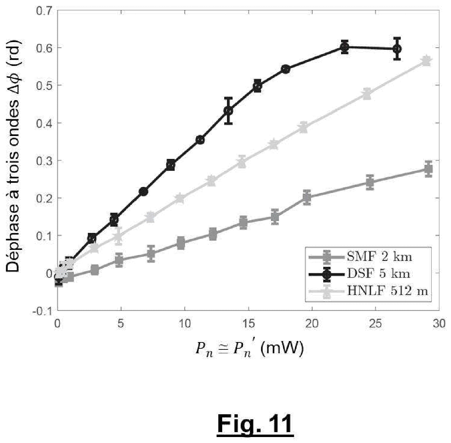

La figure 11 illustre les valeurs moyennes du paramètre de déphasage à trois ondes Δ̅*̅ϕ̅*̅⁽̅³̅⁾̅ déterminées à partir d'un ensemble de signaux complexes mesurés pour une plage de valeurs discrètes de puissances moyenne totale *Pₙ* allant de 0 à 30 mW et pour trois différents types de composants optiques 200 (comprenant une SMF de longueur *L* égale à 2 km, une DSF de longueur *L* égale à 5 km, et une HNLF de longueur *L* égale à 512 m) et une fréquence de modulation Δ*ω* constante (*f* égale à 2 GHz).

Dans les exemples représentés sur la figure 11, l'évolution du paramètre de déphasage Δ*ϕ* est bien linéaire avec la variation de la puissance moyenne totale *Pₙ* (les barres d'erreur correspondent aux valeurs de l'écart type du déphasage à trois ondes Δ*ϕ* dans chaque cas). Dans le cas du type DSF pour le composant optique 200, l'évolution du paramètre de déphasage Δ*ϕ* présente une saturation de courbe pour une variation de la puissance moyenne totale *Pₙ* supérieure à 15 mW. Cet effet est attribué à l'effet de diffusion de Brillouin. Pour déterminer la valeur de caractérisation du coefficient non linéaire *γ* d'un tel composant optique 200, la troisième unité de traitement U3 peut être configurée pour appliquer l'opération de régression linéaire sur une partie sélectionnée des données correspondant à une partie des données évoluant de façon linéaire avec la variation de la puissance moyenne totale *Pₙ.*

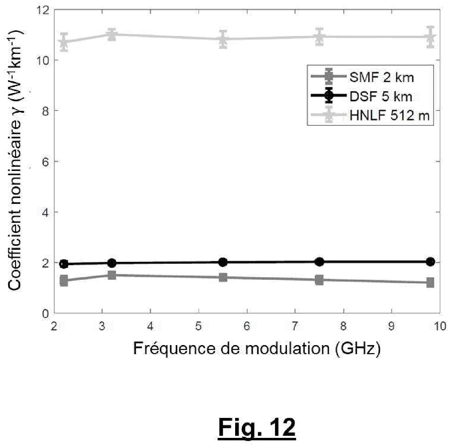

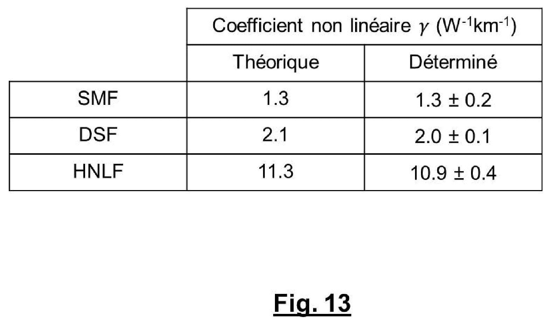

La figure 12 est une représentation graphique des valeurs du coefficient non linéaire *γ* déterminées pour trois différents types de composant optique 200 (une SMF de longueur *L* égale à 2 km, une DSF de longueur *L* égale à 5 km, une HNLF de longueur *L* égale à 512 m), obtenues pour différentes fréquences de modulation Δ*ω*. Chaque valeur de la figure 12 a été obtenue par régression linéaire *Δϕₙ*(*Pₙ*) depuis un ensemble de signaux complexes mesurés selon une plage de valeurs discrètes de puissances moyennes totale *Pₙ.* figure 12, ces valeurs de caractérisation présentent de faibles variations en fonction de la fréquence de modulation Δ*ω*. Ainsi, dans certains modes de réalisation, le système de caractérisation 10 peut être configuré pour évaluer plusieurs valeurs de caractérisation du coefficient non linéaire *γ* d'un composant optique 200, selon différentes valeurs de fréquences de modulation Δ*ω* distinctes et en déduire une valeur moyenne *γ̅* de caractérisation du coefficient non linéaire. Le tableau représenté sur la figure 13 met en miroir les valeurs théoriques *γₜₕ* de caractérisation du coefficient non linéaire et les valeurs moyennes *γ̅* déterminées par le système de caractérisation 10 pour trois différents types de composant optique 200 : une SMF, une DSF, une HNLF. Il est à noter que les valeurs théoriques *γₜₕ* du coefficient non linéaire inscrites sur la figures 13 ont, soit été calculées, soit sont issues des données fabriquant. Le tableau représenté sur la figure 13 permet d'observer une bonne concordance entre les valeurs déterminées et les valeurs théoriques, avec une erreur maximale de 5 %, confirmant l'efficacité du système de caractérisation 10.

Dans des modes de réalisation où le paramètre de différenciation est la fréquence de modulation Δ*ωₙ* des signaux optiques modulés S₁₋ₙ en sortie du générateur de signal optique 100 et où la propriété optique est la dispersion chromatique *β*₂ du composant optique 200, la régression mathématique effectuée par la troisième unité de traitement U3 peut être une régression quadratique des N valeurs ${Δϕ}_{n}^{\left(3\right)}$ (ou $\overline{{Δϕ}_{n}^{\left(3\right)}}$) du paramètre de déphasage à trois ondes par rapport auxdites N valeurs Δ*ωₙ* du paramètre de différenciation. Une équation d'extraction de la dispersion chromatique *β*₂, reliant le paramètre de déphasage à trois ondes ${Δϕ}_{n}^{\left(3\right)}$ et la fréquence de modulation Δ*ωₙ*, peut avantageusement être définie par la relation (21) suivante :
${Δϕ}_{n}^{\left(3\right)} = \left({{Δω}_{n}}^{2}\times \left[{β}_{2}\times L\right]\right) + \left({P}_{n}\times γ\times 4.{L}_{eff}\right)$ (21)

Avantageusement, les N valeurs ${Δϕ}_{n}^{\left(3\right)}$ du paramètre de déphasage à trois ondes déterminées puis utilisées dans la régression quadratique effectuée selon l'équation (21) peuvent être issues des quantités de phase ${ϕ}_{k}^{+}$ associées à la phase moyenne entre les première et deuxième composantes de paramètre de phase selon l'équation (10).

La relation (21) diffère de l'équation d'extraction du coefficient non linéaire *γ* (12), dans la mesure où, pour les N différentes valeurs ${Δϕ}_{n}^{\left(3\right)}$, la puissance moyenne totale *Pₙ* est constante.

Ainsi, dans les modes de réalisation, la troisième unité de traitement U3 peut être configurée pour estimer un paramètre d'ajustement *ρ*, obtenu à partir de la courbe de régression *Δϕₙ*(*Δωₙ*) (ou courbe d'interpolation) générée en réponse à l'opération de régression polynomiale. La valeur de caractérisation de la dispersion chromatique *β*₂ du composant optique 200 est alors évaluée à partir du paramètre d'ajustement, selon l'équation (22) :
${β}_{2} = ρ \times \frac{1}{L}$ (22)

Dans des modes de réalisation où le paramètre de différenciation est la fréquence de modulation Δ*ωₙ* des signaux optiques modulés S₁₋ₙ en sortie du générateur de signal optique 100 et où la propriété optique est le déphasage non linéaire *ϕ_{NL}* du composant optique 200, la régression mathématique effectuée par la troisième unité de traitement U3 peut être une régression quadratique des N valeurs ${Δϕ}_{n}^{\left(3\right)}$ (ou $\overline{{Δϕ}_{n}^{\left(3\right)}}$) du paramètre de déphasage à trois ondes par rapport aux N valeurs Δ*ωₙ* du paramètre de différenciation. Une équation d'extraction du déphasage non linéaire *ϕ_{NL}*, reliant le paramètre de déphasage à trois ondes ${Δϕ}_{n}^{\left(3\right)}$ et la fréquence de modulation Δ*ωₙ*, peut avantageusement être définie par la relation (23) suivante :
${Δϕ}_{n}^{\left(3\right)} = \left({ϕ}_{NL}\times 4\right) + \left({β}_{2}\times L\times {{Δω}_{n}}^{2}\right)$ (23)

Avantageusement, les N valeurs ${Δϕ}_{n}^{\left(3\right)}$ du paramètre de déphasage à trois ondes déterminées puis utilisées dans la régression quadratique effectuée selon l'équation (23) peuvent être issues des quantités de phase ${ϕ}_{k}^{+}$ associées à la phase moyenne entre les première et deuxième composantes de paramètre de phase selon l'équation (10).

Ainsi, dans les modes de réalisation, la troisième unité de traitement U3 peut être configurée pour estimer un paramètre d'interception à l'origine, noté *ρ*₀, obtenu à partir de la courbe de régression *Δϕₙ*(*Δωₙ*) (ou courbe d'interpolation) générée en réponse à l'opération de régression polynomiale. Le paramètre d'interception *ρ*₀, dit à l'origine, fait référence ici à une valeur de ${Δϕ}_{n}^{\left(3\right)}$ obtenue à partir de l'opération de régression polynomiale pour une valeur donnée de Δ*ωₙ* prédéfinie égale à 0 dans la courbe de régression *Δϕₙ*(*Δωₙ*). La valeur de caractérisation du déphasage non linéaire *ϕ_{NL}* du composant optique 200 est alors évaluée à partir du paramètre d'interception à l'origine, selon la relation (24) :
${ϕ}_{NL} = {ρ}_{0} \times 0.25$ (24)

Dans des modes de réalisation où le paramètre de différenciation correspond à la fréquence de modulation Δ*ωₙ* des signaux optiques modulés S₁₋ₙ en sortie du générateur de signal optique 100 et où la propriété optique correspond à la dispersion de biréfringence de groupe *δβ*₂ du composant optique 200, la régression mathématique effectuée par la troisième unité de traitement U3 peut être une régression quadratique des N valeurs ${Δϕ}_{n}^{\left(3\right)}$ (ou $\overline{{Δϕ}_{n}^{\left(3\right)}}$) du paramètre de déphasage à trois ondes par rapport aux N valeurs Δ*ωₙ* du paramètre de différenciation. Une équation d'extraction de la dispersion de biréfringence de groupe *δβ*₂, reliant le paramètre de déphasage à trois ondes *Δϕₙ* et la fréquence de modulation Δ*ωₙ*, peut avantageusement être définie par la relation (25) suivante :
${Δϕ}_{n} = {{Δω}_{n}}^{2} \times \left[{δβ}_{2}\times L\right]$ (25)

Avantageusement, les N valeurs ${Δϕ}_{n}^{\left(3\right)}$ du paramètre de déphasage à trois ondes déterminées puis utilisées dans la régression quadratique effectuée selon l'équation (25) peuvent être issues des quantités de phase *ϕ_{k̅}* associées au déphasage entre les première et deuxième composantes de paramètre de phase selon l'équation (11).

Ainsi, dans les modes de réalisation, la troisième unité de traitement U3 peut être configurée pour estimer un paramètre d'ajustement *ρ*, obtenu à partir de la courbe de régression *Δϕₙ*(*Δωₙ*) (ou courbe d'interpolation) générée en réponse à l'opération de régression polynomiale. La valeur de caractérisation de la dispersion de biréfringence de groupe *δβ*₂ du composant optique 200 est alors évaluée à partir du paramètre d'ajustement, selon la relation (26) :
${δβ}_{2} = ρ \times \frac{1}{L}$ (26)

Dans des modes de réalisation où le paramètre de différenciation peut correspondre à la fréquence de modulation Δ*ωₙ* des signaux optiques modulés S₁₋ₙ en sortie du générateur de signal optique 100 et où la propriété optique du composant optique 200 à caractériser peut être la biréfringence de groupe *B_{g}*, la régression mathématique effectuée par la troisième unité de traitement U3 peut être une régression linéaire de l'ensemble des N valeurs ${Δϕ}_{n}^{\left(2\right)}$ (ou $\overline{{Δϕ}_{n}^{\left(2\right)}}$) du paramètre de déphasage à deux ondes, par rapport aux N valeurs de la fréquence de modulation Δ*ωₙ* (correspondant au paramètre de différenciation) appliquée pour générer les N signaux optiques modulés S₁₋ₙ. Une équation d'extraction de la biréfringence de groupe *B_{g},* ${Δϕ}_{n}^{\left(2\right)}$ et la fréquence de modulation Δ*ωₙ,*
${Δ}_{{ϕ}_{n}}^{\left(2\right)} = {Δω}_{n} \times \left[{B}_{g}\times \frac{L \times 2}{c}\right]$ (27)

Avantageusement, les N valeurs ${Δϕ}_{n}^{\left(2\right)}$ du paramètre de déphasage à deux ondes déterminées puis utilisées dans la régression linéaire effectuée selon l'équation (27), peuvent être issues des quantités de phase *ϕ_{k̅}* associées au déphasage entre les première et deuxième composantes de paramètre de phase selon l'équation (11).

Ainsi, dans ces modes de réalisation, la troisième unité de traitement U3 peut être configurée pour estimer un coefficient directeur *δ*, obtenu à partir de la courbe de régression *Δϕₙ*(*Δωₙ*) (ou courbe d'interpolation) générée en réponse à l'opération de régression linéaire. La valeur de caractérisation de la biréfringence de groupe *B_{g}* du composant optique 200 est alors évaluée à partir du coefficient directeur, selon la relation (28) :
${B}_{g} = δ \times \frac{c}{L \times 2}$ (28)

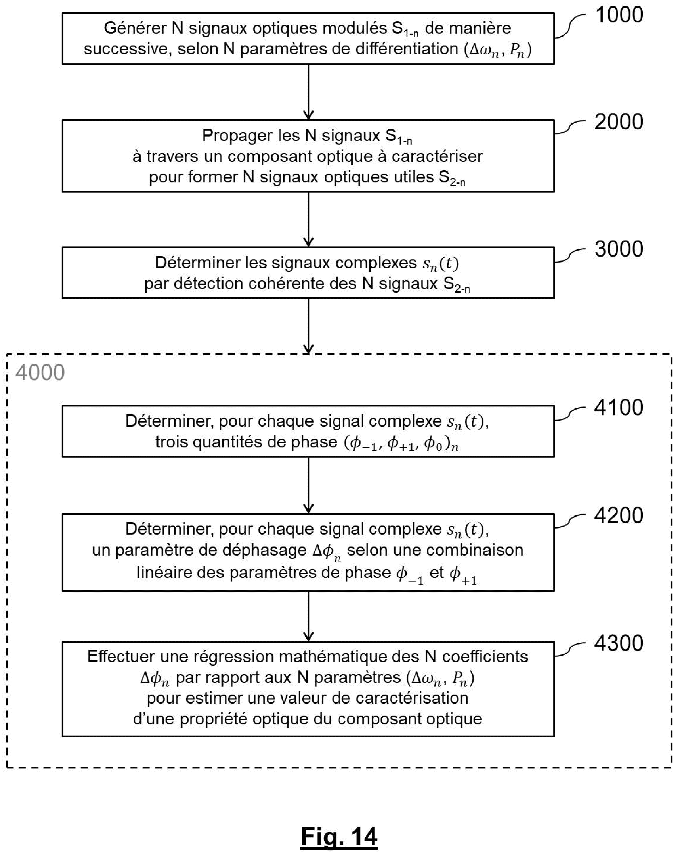

La figure 14 est un organigramme représentant le procédé de détermination (ou procédé de caractérisation) d'au moins une propriété optique d'un composant optique 200 mis en œuvre par le système de caractérisation 10, selon des modes de réalisation de l'invention.

Le procédé comprend une étape 1000 de génération de manière successive d'un ensemble de N signaux optiques modulés S₁₋ₙ, selon N valeurs d'un paramètre de différenciation qui peut être choisi parmi un ensemble de paramètres de différenciation comprenant la fréquence de modulation sinusoïdale Δ*ωₙ* ou la puissance moyenne totale *Pₙ* de chacun des signaux. L'étape préliminaire 1000 peut être mise en œuvre par un générateur de signal optique 100.

A l'étape 2000, les N signaux optiques modulés S₁₋ₙ se propagent à travers le composant optique 200 à caractériser pour former N signaux optiques utiles S₂₋ₙ résultants.

Les signaux optiques utiles S₂₋ₙ et les signaux optiques modulés S₁₋ₙ peuvent être caractérisés par un spectre comprenant deux bandes de fréquences latérales de modulation *ω*_{±1} de chaque côté d'une fréquence porteuse *ω*₀.

A l'étape 3000, les N signaux optiques utiles S₂₋ₙ sont dirigés vers un dispositif de détection optique cohérente 300 pour effectuer de manière successive la détection cohérente de chacun de ces signaux optiques utiles S₂₋ₙ et délivrer N signaux complexes s*ₙ*(*t*) résultants.

Le procédé comprend en outre des étapes de traitement mises en œuvre par exemple par un dispositif d'analyse 400.

Plus précisément, à l'étape 4100, chaque signal complexe s*ₙ*(t) obtenu par détection cohérente est analysé pour déterminer au moins deux paramètres de phase *ϕ*_{*-*1} et *ϕ*₊₁. Avantageusement, les trois paramètres de phase (*ϕ*₋₁, *ϕ*₊₁, *ϕ*₀)*ₙ* sont déterminés. Un paramètre de phase *ϕₖ* (avec k = -1, 0 ou +1) est lié à une des deux bandes de fréquences latérales de modulation *ω*_{±1} ou à la fréquence porteuse *ω*₀ d'un signal complexe *s*(t) considéré.

A l'étape 4200, un paramètre de déphasage Δ*ϕₙ* entre les quantités de phase *ϕ*_{*-*1} et *ϕ*₊₁ est déterminé. Avantageusement, le paramètre de déphasage Δ*ϕₙ* peut être défini à partir de l'équation de détermination du déphasage à trois ondes (03) ou à deux ondes (04).

A l'étape 4300, une régression mathématique des N valeurs du paramètre de déphasage Δ*ϕₙ* par rapport aux N valeurs du paramètres de différenciation appliqué, Δ*ωₙ* ou *Pₙ*, est effectuée. Une telle régression mathématique permet d'estimer une valeur de caractérisation de la propriété optique du composant optique 200 à caractériser.

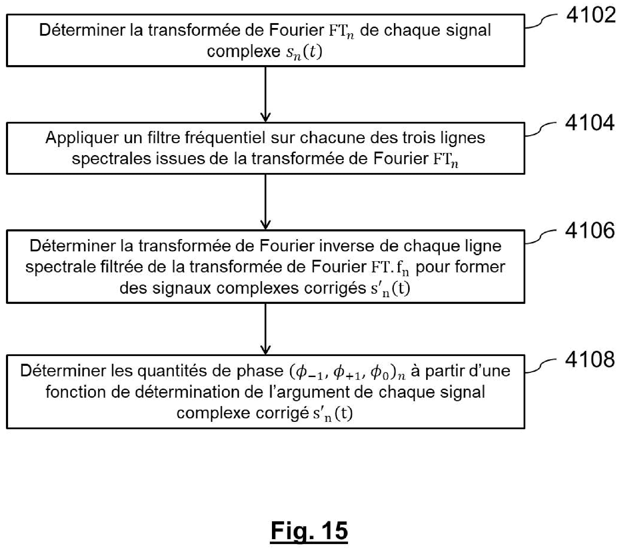

La figure 15 est un organigramme de l'étape d'analyse des signaux complexes s*ₙ*(t) 4100 du procédé de détermination d'au moins une propriété optique d'un composant optique 200, mises en œuvre par le dispositif d'analyse 400, selon des modes de réalisation de l'invention.

A l'étape 4102, une transformée de Fourier peut être appliquée à chaque signal complexe *sₙ*(*t*), ce qui fournit N séries (ou ensembles) de données spectrales FT*ₙ*. Chaque série de données spectrales FT*ₙ* comprend trois raies spectrales respectivement relatives à une des deux bandes de fréquences latérales de modulation *ω*_{±1} et à la fréquence porteuse *ω*₀ d'un signal complexe *s*(t) considéré. Une première raie spectrale est associée à la première fréquence latérale de modulation ω₋₁ du signal optique utile S₂₋ₙ, une deuxième raie spectrale est associée à la deuxième fréquence latérale (ω₊₁) de modulation du signal optique utile S₂₋ₙ, et une troisième raie spectrale est associée à la fréquence porteuse ω₀ du signal optique utile S₂₋ₙ.

A l'étape 4104, pour chaque série de données spectrales FT*ₙ*, un filtrage peut être effectué, dans le domaine fréquentiel, autour de chacune des raies spectrales identifiées, pour générer N séries (ou ensembles) de données spectrales filtrées FT. fₙ.

A l'étape 4106, une transformée de Fourier inverse peut être appliquée à chaque série de données filtrées FT.fₙ, ce qui fournit N signaux temporels complexes corrigés s'ₙ(t).

A l'étape 4108, l'argument de chaque signal complexe corrigé s'ₙ(t) peut être déterminé et les paramètres de phase (*ϕ*₋₁, *ϕ*₊₁, *ϕ*₀)*ₙ* peuvent être déterminés à partir de la valeur ou des valeurs d'arguments obtenues.

L'homme du métier comprendra aisément que certaines étapes ou sous-étapes du procédé peuvent être réalisées de manière simultanée, séquentielle, successive, indépendamment ou non, par exemple selon un séquencement défini par le système de caractérisation 10.

Par exemple et sans limitations, les signaux optiques modulés S₁₋ₙ étant générés de manière successive, les étapes et sous-étapes de traitement 4100 et 4200 peuvent être déclenchées et mises en œuvre à chaque fois qu'un signal complexe s*ₙ*(t) est généré par un dispositif de détection optique cohérente 300. L'étape de traitement 4300 peut être déclenchée et mise en œuvre par exemple lorsque les N signaux complexes s*ₙ*(t) ont été analysés pour générer N valeurs Δ*ϕₙ* du paramètre de déphasage. Alternativement, l'étape de traitement 4300 peut être déclenchée et mise en œuvre par exemple une première fois lorsque deux premiers signaux complexes s*ₙ*(t) ont été analysés pour générer deux premières valeurs du paramètre de déphasage, par exemple Δ*ϕ*₁ et Δ*ϕ*₂, puis de manière itérative lorsque un ou plusieurs autres valeurs Δ*ϕₙ* (i.e. *n* > 2) du paramètre de déphasage ont été générés.

Dans des modes de réalisation, une plage de valeurs du paramètre de différenciation appliqué, Δ*ωₙ* ou *Pₙ*, peut être définie initialement et utilisée pour former l'ensemble des N signaux optiques modulés S₁₋ₙ, dans l'étape préliminaire 1000 pour sonder le composant optique 200.

Dans d'autres modes de réalisation, le ou les résultats de l'étape de traitement 4300 peuvent être synchronisés par rapport à l'étape 1000 de génération des signaux optiques modulés S₁₋ₙ, par exemple de manière à répéter les étapes du procédé jusqu'à atteindre par exemple une valeur cible de l'écart type entre les valeurs du paramètre de déphasage déterminées à la sous-étape 4300.
Le procédé décrit précédemment selon les modes de réalisation de l'invention peut être mis en œuvre en utilisant divers éléments. En particulier, l'homme du métier comprendra que des étapes du procédé de la figure 14, selon les modes de réalisation de l'invention, peuvent être mises en œuvre de diverses manières par matériel (« hardware »), logiciel, ou une combinaison de matériel et de logiciels, notamment sous la forme de code de programme pouvant être distribué sous la forme d'un produit de programme, sous diverses formes. L'homme du métier comprendra également que des étapes du procédé de la figure 14 et les étapes du procédé de la figure 15 peuvent être mises en œuvre par ordinateur, en particulier en tant que programme d'ordinateur comportant des instructions pour son exécution. Par exemple, le dispositif d'analyse 400 peut comprendre un ordinateur. Le programme d'ordinateur peut être enregistré sur une mémoire ou un support d'enregistrement lisible par un processeur. La référence à un programme d'ordinateur qui, lorsqu'il est exécuté, effectue l'une quelconque des fonctions des étapes de traitement numérique décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici.

## Revendications

1. Procédé de détermination d'au moins une propriété optique d'un composant optique (200), ledit procédé comprenant les étapes consistant à :
- générer (1000) de manière successive un ensemble de N signaux optiques (S₁₋ₙ) modulés à partir d'un faisceau laser monochromatique (S₀), selon une fréquence de modulation sinusoïdale (Δ*ωₙ*, *Δω*) donnée, N étant un entier supérieur ou égal à 2, chaque signal optique modulé (S₁₋ₙ) ayant une puissance moyenne totale (*Pₙ*) donnée, lesdits signaux optiques modulés (S₁₋ₙ) ayant des valeurs différentes d'un paramètre de différenciation choisi parmi la fréquence de modulation sinusoïdale (Δ*ωₙ*) et la puissance moyenne totale (*Pₙ*),
- propager (2000) lesdits signaux optiques modulés (S₁₋ₙ) à travers ledit composant optique (200) pour former N signaux optiques utiles (S₂₋ₙ), et
- effectuer (3000) une détection cohérente de chacun desdits signaux optiques utiles (S₂₋ₙ) en sortie dudit composant optique (200) et délivrer N signaux complexes (s*ₙ*(t)) résultants,
ledit procédé comprenant en outre les étapes suivantes consistant à :
- déterminer (4100), pour chaque signal complexe (s*ₙ*(t)), un ensemble de paramètres de phase (*ϕ*_{0*n*}, *ϕ*_{-1*n*}, *ϕ*_{+1*n*}) comprenant au moins un premier paramètre de phase, *ϕ*₋₁ₙ, relatif à une première fréquence latérale de modulation (*ω*₋₁) du signal optique utile (S₂₋ₙ), et un deuxième paramètre de phase, *ϕ*_{+1*n*}, relatif à une deuxième fréquence latérale (*ω*₊₁) de modulation du signal optique utile (S₂₋ₙ),
- déterminer (4200) une valeur d'un paramètre de déphasage défini par une combinaison linéaire d'au moins ledit premier paramètre de phase, *ϕ*_{-1*n*}, et ledit deuxième paramètre de phase, *ϕ*_{+1*n*},
- déterminer (4300) la valeur de ladite propriété optique du composant optique (200) en effectuant une régression mathématique des N valeurs dudit paramètre de déphasage par rapport aux N valeurs dudit paramètre de différenciation des N signaux optiques modulés (Δ*ωₙ* ou *Pₙ*)*.*

2. Procédé selon la revendication 1, dans lequel le procédé comprend en outre les étapes consistant à :
- appliquer (4102) une transformée de Fourier à chacun des N signaux complexes (s*ₙ*(t)), pour former N ensembles de données spectrales (FT*ₙ*), chaque ensemble de données spectrales comprenant une première raie spectrale relative à la première fréquence latérale de modulation (*ω*₋₁), une deuxième raie spectrale relative à la deuxième fréquence latérale (*ω*₊₁) de modulation, et une troisième raie spectrale relative à la fréquence porteuse (*ω*₀) de modulation du signal optique utile (S₂₋ₙ),
- appliquer (4104) un filtrage spectral autour de chacune desdites raies spectrales obtenues pour générer N données spectrales filtrées (FT. f*ₙ*),
- appliquer (4106) une transformée de Fourier inverse à chacune des données spectrales filtrées (FT. f*ₙ*), pour former N signaux temporels complexes corrigés (s'ₙ(t)),
et dans lequel, pour chaque signal optique utile (S₂₋ₙ) considéré, ledit ensemble de paramètres de phase (*ϕ*_{0*n*}, *ϕ*_{-1*n*}, *ϕ*_{+1*n*}) est déterminé à partir de l'argument de chacun des signaux temporels complexes corrigés (s'ₙ(t)) obtenus.

3. Procédé selon la revendication 1 ou 2, dans lequel ledit ensemble de paramètres de phase (*ϕ*_{0*n*}, *ϕ*_{-1*n*}, *ϕ*_{+1*n*}) déterminé pour chaque signal complexe (s*ₙ*(t)) comprend un troisième paramètre de phase, *ϕ*_{0*n*}, relatif à une la fréquence porteuse (*ω*₀) de modulation du signal optique utile (S₂₋ₙ), et dans lequel ladite combinaison linéaire définissant ledit paramètre de déphasage est définie par la relation : ${Δϕ}_{n}^{\left(3\right)} = {ϕ}_{+ 1 n} + {ϕ}_{- 1 n} - 2 {ϕ}_{0 n}$

4. Procédé selon l'une des revendications 1 ou 2, dans lequel ladite combinaison linéaire définissant ledit paramètre de déphasage est définie par la relation : ${Δϕ}_{n}^{\left(2\right)} = {ϕ}_{+ 1 n} - {ϕ}_{- 1 n}$

5. Procédé selon la revendication 3, dans lequel ledit paramètre de différenciation correspond à la puissance moyenne totale (*Pₙ*) desdits signaux optiques modulés (S₁₋ₙ), lesdits signaux optiques modulés (S₁₋ₙ) ayant la même fréquence de modulation sinusoïdale (*Δω*), et dans lequel ladite propriété optique dudit composant optique (200) est le coefficient non linéaire (*γ*) du composant optique (200) obtenu à partir du rapport entre un coefficient directeur (*δ*) d'une droite de régression estimée par régression linéaire des N valeurs (*Δϕₙ*, ${Δϕ}_{n}^{\left(3\right)}$) dudit paramètre de déphasage par rapport aux N valeurs du paramètre de différenciation (*Pₙ*)*,* et une valeur de longueur effective (*L_{eff}*) dudit composant optique (200) traversée par lesdits signaux optiques modulés (S₁₋ₙ).

6. Procédé selon la revendication 3, dans lequel ledit paramètre de différenciation correspond à la fréquence de modulation sinusoïdale donnée (*Δωₙ*) desdits signaux optiques modulés (S₁₋ₙ), lesdits signaux optiques modulés (S₁₋ₙ) ayant la même puissance moyenne totale (*Pₙ*), et dans lequel ladite propriété optique dudit composant optique (200) est la dispersion chromatique (*β*₂) du composant optique (200) obtenue à partir du rapport entre un paramètre d'ajustement (*ρ*) d'une courbe de régression estimée par régression quadratique des N valeurs (*Δϕₙ*, ${Δϕ}_{n}^{\left(3\right)}$) du paramètre de déphasage par rapport aux N valeurs du paramètre de différenciation (*Δωₙ*), et une valeur de la longueur (L) dudit composant optique (200) traversée par lesdits signaux optiques modulés (S₁₋ₙ).

7. Procédé selon la revendication 3, dans lequel ledit paramètre de différenciation correspond à la fréquence de modulation sinusoïdale donnée (*Δωₙ*) desdits signaux optiques modulés (S₁₋ₙ), lesdits signaux optiques modulés (S₁₋ₙ) ayant la même puissance moyenne totale (*Pₙ*)*,* et dans lequel ladite propriété optique dudit composant optique (200) est le déphasage non linéaire (*ϕ_{NL}*) du composant optique (200) obtenue à partir du rapport entre un paramètre d'interception (*ρ*₀) d'une courbe de régression estimée à partir d'une régression quadratique des N valeurs (*Δϕₙ*, ${Δϕ}_{n}^{\left(3\right)}$) du paramètre de déphasage par rapport aux N valeurs du paramètre de différenciation (*Δωₙ*), et une valeur d'entier égale à 4

8. Procédé selon l'une des revendications 1 à 7, dans lequel ladite détection cohérente de chaque signal optique utile (S₂₋ₙ) est appliquée sur une première composante définie selon une première polarisation (x) du signal et sur une deuxième composante définie selon une deuxième polarisation (y) de signal, de manière à délivrer N signaux complexes ( ${s}_{n}^{x} \left(t\right)$) selon la première polarisation (x) et N signaux complexes ( ${s}_{n}^{y} \left(t\right)$) selon la deuxième polarisation (y),
et dans lequel chaque paramètre de phase (*ϕ*₋₁, *ϕ*₊₁, *ϕ*₀) correspond à une phase moyenne entre des valeurs de phases desdites première et deuxième composantes ( ${ϕ}_{k}^{x} , {ϕ}_{k}^{y}$), telles que : ${ϕ}_{k} = \frac{1}{2} \times \left({ϕ}_{k}^{x}+{ϕ}_{k}^{y}\right)$ (avec *k* = -1, 0 ou +1).

9. Procédé selon l'une des revendications 1 à 4, dans lequel ladite détection cohérente de chaque signal optique utile (S₂₋ₙ) est appliquée sur une première composante définie selon une première polarisation (x) du signal et sur une deuxième composante définie selon une deuxième polarisation (y) de signal, de manière à délivrer N signaux complexes ( ${s}_{n}^{x} \left(t\right)$) selon la première polarisation (x) et N signaux complexes ( ${s}_{n}^{y} \left(t\right)$) selon la deuxième polarisation (y),
dans lequel chaque paramètre de phase (*ϕ*₋₁, *ϕ*₊₁, *ϕ*₀) correspond à un déphase entre lesdites première et deuxième composantes, telle que : ${ϕ}_{k} = \frac{1}{2} \times \left({ϕ}_{k}^{x}-{ϕ}_{k}^{y}\right)$ (avec *k* = -1, 0 ou +1).

10. Procédé selon la revendication 8 dans sa dépendance à la revendication 3, dans lequel ledit paramètre de différenciation correspond à la fréquence de modulation sinusoïdale donnée (*Δωₙ*) desdits signaux optiques modulés (S₁₋ₙ), lesdits signaux optiques modulés (S₁₋ₙ) ayant la même puissance moyenne totale (*Pₙ*), et dans lequel ladite propriété optique dudit composant optique (200) est la dispersion de biréfringence de groupe (*δβ*₂) du composant optique (200) obtenue à partir du rapport entre un paramètre d'ajustement (*ρ*) d'une courbe de régression estimée par régression quadratique des N valeurs (*Δϕₙ,* ${Δϕ}_{n}^{\left(3\right)}$) du paramètre de déphasage par rapport aux N valeurs du paramètre de différenciation (*Δωₙ*), et une valeur de la longueur *(*L) dudit composant optique (200) traversée par lesdits signaux optiques modulés (S₁₋ₙ).

11. Procédé selon la revendication 8 dans sa dépendance à la revendication 4, dans lequel ledit paramètre de différenciation correspond à la fréquence de modulation sinusoïdale donnée (Δ*ωₙ*) desdits signaux optiques modulés (S₁₋ₙ), lesdits signaux optiques modulés (S₁₋ₙ) ayant la même puissance moyenne totale (*Pₙ*), et dans lequel ladite propriété optique dudit composant optique (200) est la biréfringence de groupe (*B_{g}*) du composant optique (200) obtenu à partir du rapport entre un coefficient directeur (*δ*) d'une droite de régression estimée par régression linéaire des N valeurs (*Δϕₙ*, ${Δϕ}_{n}^{\left(2\right)}$) dudit paramètre de déphasage par rapport aux N valeurs du paramètre de différenciation (*Δωₙ*), et une valeur du rapport entre la longueur (*L*) dudit composant optique (200) traversée par lesdits signaux optiques modulés (S₁₋ₙ) et la vitesse (c) de la lumière dans le vide.

12. Système (10) de détermination d'au moins une propriété optique d'un composant optique (200), ledit système (10) comprenant :
- un générateur de signal (100) configuré pour générer de manière successive un ensemble de N signaux optiques modulés (S₁₋ₙ), N étant un entier supérieur ou égal à 2, chaque signal optique modulé (S₁₋ₙ) ayant une puissance moyenne totale (*Pₙ*) donnée et étant un signal optique modulé à partir d'un faisceau laser monochromatique (S₀), selon une fréquence de modulation sinusoïdale (Δ*ωₙ*, *Δω*) donnée, lesdits signaux optiques modulés (S₁₋ₙ) ayant des valeurs différentes d'un paramètre de différenciation choisi parmi la fréquence de modulation sinusoïdale (Δ*ωₙ*) et la puissance moyenne totale (*Pₙ*), lesdits signaux optiques modulés (S₁₋ₙ) étant transmis à travers ledit composant optique (200) pour former N signaux optiques utiles (S₂₋ₙ) résultants,
- un détecteur cohérent (300) configuré pour effectuer une détection cohérente de chacun desdits signaux optiques utiles (S₂₋ₙ) en sortie dudit composant optique (200) et délivrer N signaux complexes (s*ₙ*(t)) résultants,
ledit système comprenant en outre un dispositif d'analyse (400) configuré pour analyser chaque signal complexe (s*ₙ*(t)) et déterminer au moins un premier paramètre de phase, *ϕ*_{-1*n*}, relatif à une première fréquence latérale de modulation (*ω*₋₁) du signal optique utile (S₂₋ₙ), et un deuxième paramètre de phase, *ϕ*_{+1*n*}, relatif à une deuxième fréquence latérale (*ω*₊₁) de modulation du signal optique utile (S₂₋ₙ),
ledit dispositif d'analyse (400) étant configuré pour déterminer une valeur, Δ*ϕₙ*, d'un paramètre de déphasage entre lesdites paramètres de phase (*ϕ*_{0*n*}, *ϕ*_{-1*n*}, *ϕ*_{+1*n*}) déterminées, ledit paramètre de déphasage, Δ*ϕₙ*, étant défini par une combinaison linéaire d'au moins ledit premier paramètre de phase, *ϕ*_{-1*n*}, et ledit deuxième paramètre de phase, *ϕ*_{+1*n*},
ledit dispositif d'analyse (400) étant en outre configuré pour déterminer une valeur de ladite propriété optique du composant optique (200) en effectuant une régression mathématique des N valeurs, Δ*ϕₙ*, dudit paramètre de déphasage par rapport aux valeurs du paramètre de différenciation des N signaux optiques modulés (Δ*ωₙ* ou *Pₙ*).

13. Système (10) selon la revendication 12, dans lequel ledit générateur de signal (100) comprend :
- une source optique initiale (110) configurée pour générer le faisceau laser monochromatique (S₀) de fréquence angulaire (*ω*₀) correspondant à la fréquence porteuse (*ω*₀) de modulation desdits signaux optiques modulés (S₁₋ₙ) et utiles (S₂₋ₙ), et
- un modulateur optique (122) configuré pour appliquer au moins une fréquence de modulation sinusoïdale (Δ*ωₙ*, *Δω*) audit faisceau laser monochromatique (S₀), pour former ledit ensemble de N signaux optiques modulés (S₁₋ₙ).
